# EUROPEAN PATENT APPLICATION

(11) **EP 4 538 959 A1**
(43) Date of publication of application: **16.04.2025**
(21) Application number: 23924982.4
(22) Date of filing: 09.11.2023
(51) Int. Cl.: G06T 5/00, G06T 3/00

(54) **IMAGE PROCESSING METHOD AND ELECTRONIC DEVICE**

(30) Priority: 27.02.2023 CN 202310231420
(71) Applicant: Honor Device Co., Ltd., Shenzhen, Guangdong 518040 (CN)
(72) Inventor: LI, Siwen, Shenzhen, Guangdong 518040 (CN)
(74) Representative: Goddar, Heinz J.
(86) International application number: PCT/CN2023/130810
(87) International publication number: WO 2024/179031

(57) **Abstract**

Embodiments of this application provide an image processing method and an electronic device, and relate to the field of image processing technologies. After image editing is performed, updating of a luminance graph based on editing content can be implemented, to obtain more accurate **HDR** display effect. The method may include: The electronic device displays a first image by using a display, where a luminance value of a first position on the display is a first luminance value, and a luminance value of a second position on the display is a second luminance value; and the electronic device displays a second image by using the display, where the luminance value of the first position is the first luminance value, the luminance value of the second position is a third luminance value, and the second position on the display is located on a path of the editing content, and the first position on the display is not located on the path of the editing content.

## Description

This application claims priority to Chinese Patent Application No. 202310231420.X, filed with the China National Intellectual Property Administration on February 27, 2023 and entitled "IMAGE PROCESSING METHOD AND ELECTRONIC DEVICE", which is incorporated herein by reference in its entirety.

### TECHNICAL FIELD

Embodiments of this application relate to the field of image processing technologies, and in particular, to an image processing method and an electronic device.

### BACKGROUND

When performing high-dynamic range (HDR) image shooting, an electronic device may obtain a standard dynamic range (SDR) image and a luminance graph in a current scenario for storage.

When a user wants to view an image shooting result, the electronic device may display a full-size image of the shot image under control of the user. In some cases, the electronic device may adjust display effect of the full-size image based on the luminance graph, to provide HDR display effect of brighter highlights for the user.

The electronic device may further provide an image editing function for the user. An editing process is generally performed for an SDR image. After editing is completed, the electronic device may store a luminance graph of an original image and an SDR image including editing content. The electronic device may adjust, based on the luminance graph, display effect of the SDR image including the editing content.

### SUMMARY

This application provides an image processing method and an electronic device, to implement, after image editing is performed, updating of a luminance graph based on editing content, to obtain more accurate HDR display effect.

To achieve the foregoing technical objective, the following technical solutions are used in this application.

According to a first aspect, an image processing method is provided. The method is applied to an electronic device, and a first application runs in the electronic device. The electronic device stores a first image and a second image. The second image includes the first image and editing content added to the first image through editing processing. The method may include: The electronic device displays the first image by using a display, where a luminance value of a first position on the display is a first luminance value, and a luminance value of a second position on the display is a second luminance value; and the electronic device displays the second image by using the display, where the luminance value of the first position is the first luminance value, the luminance value of the second position is a third luminance value, and the second position on the display is located on a path of the editing content, and the first position on the display is not located on the path of the editing content.

In this way, based on this solution, the electronic device may flexibly adjust luminance of each position on the display based on a transparency value of each position indicated in a luminance graph of a to-be-displayed image, to obtain HDR display effect. In this example, a transparency value on the path of the editing content is different from a transparency value of the position of an original image. Therefore, after luminance adjustment processing is performed, a luminance value of the position (such as the second position) is also different. Therefore, after an image is edited, the electronic device may also perform accurate luminance adjustment processing on an edited image, to obtain more accurate HDR display effect.

Optionally, the first image includes a first SDR image and a first luminance graph, and the second image includes a second SDR image and a second luminance graph.

Optionally, the first luminance graph is different from the second luminance graph.

In this way, the luminance graph of the second image obtained after editing is different from the luminance graph obtained before editing. Therefore, inaccurate adjustment performed on display luminance of the second luminance graph based on the first luminance graph is avoided.

Optionally, the first luminance graph includes first luminance graph data, and the second luminance graph includes second luminance graph data. That the first luminance graph is different from the second luminance graph includes: The first luminance graph data is different from the second luminance graph data. In different implementations, luminance graph data may have different implementations. For example, in the following example, the luminance graph data may correspond to a transparency value.

Optionally, the first luminance graph data includes a transparency value of each position in the first image, and the second luminance graph data includes a transparency value of each position in the second image; and that the first luminance graph data is different from the second luminance graph data includes: In the first luminance graph data, a transparency value of a position corresponding to the second position is a first transparency value; in the second luminance graph data, a transparency value of a position corresponding to the second position is a second transparency value; and the first transparency value is different from the second transparency value.

Optionally, the electronic device configures, based on a luminance graph of a target image, a luminance value that is of each display unit on the display and that is obtained when the target image is displayed.

Optionally, the target image includes the first image, and that the electronic device displays the first image by using a display includes: The electronic device configures and displays a luminance value of each display unit on the display based on the first luminance graph.

Optionally, the target image includes the second image, and that the electronic device displays the second image by using the display includes: The electronic device configures and displays a luminance value of each display unit on the display based on the second luminance graph.

Optionally, when a transparency value indicated by the luminance graph of the target image is larger, a luminance value that is of a corresponding position on the display and that is configured by the electronic device is larger.

Optionally, content corresponding to the second SDR image includes content corresponding to the first SDR image, and the content corresponding to the second SDR image further includes the editing content.

Optionally, after grayscale coloring is performed on the first luminance graph and the second luminance graph, content corresponding to the second luminance graph includes the editing content.

In this case, in the foregoing solution, display luminance adjustment is performed on the display based on a transparency value of each position in the luminance graph. In this way, in a case that the editing content is fused into the second luminance graph, the electronic device may more accurately adjust display luminance of the edited image based on the second luminance graph.

Optionally, before the electronic device displays the second image by using the display, the method further includes: The electronic device receives an editing operation of a user, where the editing operation is used to perform image editing on the first image, and the image editing includes at least one of the following: a graffiti operation, text editing, a trimming operation, and a rotation operation; and in response to the editing operation, the electronic device performs editing processing on the first image, to obtain the second image.

Optionally, that the electronic device performs editing processing on the first image, to obtain the second image includes: creating a first map, and drawing the first SDR image on the first map; and drawing, on the first SDR image on the first map based on the editing operation, the editing content corresponding to the editing operation, to obtain the second SDR image of the second image on the first map. In this way, an updated SDR image is obtained.

Optionally, that the electronic device performs editing processing on the first image, to obtain the second image further includes: determining the second luminance graph of the second image based on the first luminance graph of the first image.

Optionally, the determining the second luminance graph of the second image includes: determining transparency values of the first position and the second position.

Optionally, determining the transparency value of the second position includes: determining the first transparency value of the second position based on the first luminance graph of the first image; obtaining a transparency value of the editing content at the second position based on the editing operation; and determining the transparency value of the second position in the second image based on the first transparency value and the transparency value of the editing content at the second position. In this way, a transparency value of each position on the path of the editing content is obtained.

Optionally, determining the transparency value of the first position includes: determining a third transparency value of the first position based on the first luminance graph of the first image; and determining the third transparency value as the transparency value of the first position in the second image. It may be understood that, in an area outside an editing path, a transparency value may be unchanged.

Optionally, before the determining the second luminance graph of the second image, the method further includes: determining that luminance adjustment processing needs to be performed when the second image is displayed, to obtain E-HDR display effect, where the luminance adjustment processing includes: adjusting luminance of each position display unit on the display based on the second luminance graph of the second image.

Optionally, the determining that luminance adjustment processing needs to be performed when the second image is displayed includes: The electronic device obtains a type of the editing operation; and in a case that the type of the editing operation is a first type, it is determined that luminance graph adjustment processing needs to be performed on the second image when the second image is displayed, where the type of the editing operation includes the first type and a second type, the first type indicates that a current editing operation is not related to luminance adjustment, and the second type indicates that a current editing operation is a luminance-related editing operation.

Optionally, an editing operation corresponding to the first type includes at least one of the following: a graffiti operation, text editing, a trimming operation, and a rotation operation; and an editing operation corresponding to the second type includes at least one of the following: beauty editing and filter editing.

In this way, before luminance graph processing of fusing the editing content is performed, the electronic device may determine that the luminance graph needs to be used to perform E-HDR processing. This avoids that the luminance graph obtained after fusion processing is not used.

Optionally, before performing editing processing on the first image, to obtain the second image, the method further includes: placing, into a user operation stack, editing information of the editing operation input by the user, where the editing information includes at least one of the following: path information of the editing operation, color information of the editing operation, and text information of the editing operation.

Optionally, the method further includes: A saving indication of the user is received, where the saving indication is used to indicate the electronic device to store a current edited image; and in response to the saving indication, the electronic device obtains the second image and saves the second image.

Optionally, obtaining the second image includes: obtaining, from the user operation stack according to the saving indication, at least one piece of editing information corresponding to a current editing operation; determining image information of the second image based on the at least one piece of editing information corresponding to the current editing operation, where the image information of the second image includes a first storage address of the first image, the at least one piece of editing information corresponding to the current editing operation, and image saving quality; generating an image saving task, where the image saving task carries the image information of the second image; and executing the image saving task, and determining the second image based on the image information of the second image. In this example, processing and obtaining of the second SDR image and the second luminance graph may be triggered after the user inputs, to the electronic device, an operation of saving the edited image.

According to a second aspect, an image processing method is provided. The method is applied to an electronic device. The method includes: The electronic device displays a first image by using a display, where the first image includes a first area, and luminance that is on the display and that corresponds to the first area is a first luminance value; an editing operation of a user on the first image is received, where the editing operation passes through the first area, and the editing operation corresponds to editing content; the electronic device saves a second image, where the second image includes the editing content; and the electronic device displays the second image by using the display, where the second image includes the first area, luminance that is on the display and that corresponds to an area in the first area other than the editing content is the first luminance value, and luminance that is on the display and that corresponds to the editing content is a second luminance value; and the first luminance value is different from the second luminance value. This solution provides another example in which different luminance display is performed based on different luminance graphs. It should be noted that the first image and the second image may further include more areas, for example, a second area. If the editing content does not pass through the second area, for display effect of the second area, reference may be made to display effect of the area in the first area other than the editing content. If the editing content passes through at least a part of the second area, for display effect of the part that includes the editing content and that is in the second area, reference may be made to display effect of a path of the editing content in the first area.

Optionally, before the electronic device displays a first image by using a display, the method further includes: The electronic device stores a first SDR image and a first luminance graph of the first image.

Optionally, before the electronic device saves a second image, the method further includes: The electronic device receives a saving indication of the user, and stores a second SDR image and a second luminance graph of the second image, where the first luminance graph is different from the second luminance graph.

Optionally, the first luminance graph includes first luminance graph data, and the second luminance graph includes second luminance graph data. That the first luminance graph is different from the second luminance graph includes: The first luminance graph data is different from the second luminance graph data.

Optionally, the first luminance graph data includes a transparency value of each position in the first image, and the second luminance graph data includes a transparency value of each position in the second image; and that the first luminance graph data is different from the second luminance graph data includes: In the first luminance graph data, a transparency value of a position corresponding to the second position is a first transparency value; in the second luminance graph data, a transparency value of a position corresponding to the second position is a second transparency value; and the first transparency value is different from the second transparency value.

According to a third aspect, an electronic device is provided. The electronic device includes a memory, a display, and one or more processors. The memory and the display are coupled to the processor. The memory is configured to store computer program code. The computer program code includes computer instructions. When the processor executes the computer instructions, the electronic device is enabled to execute the technical solution provided in any one of the first aspect and the possible implementations of the first aspect. For example, the display may have a partition dimming capability. For example, the display may be an OLED screen. When the electronic device performs image display, luminance of a display unit on each display may be adjusted based on a luminance graph of an image, thereby implementing E-HDR display effect.

According to a fourth aspect, this application further provides a chip system. The chip system is applied to an electronic device. The chip system may include one or more interface circuits and one or more processors. The interface circuit and the processor are connected to each other through lines. The interface circuit is configured to receive a signal from a memory of the electronic device and transmit the signal to the processor. The signal includes computer instructions stored in the memory. When the processor executes the computer instructions, the electronic device executes the technical solution provided in any one of the first aspect and the possible implementations of the first aspect.

According to a fifth aspect, this application further provides a computer-readable storage medium, including computer instructions. When the computer instructions are run on an electronic device, the electronic device is enabled to execute the technical solution provided in any one of the first aspect and the possible implementations of the first aspect.

According to a sixth aspect, this application further provides a computer program product. When the computer program product runs on a computer, the computer is enabled to execute the technical solution provided in any one of the first aspect and the possible implementations of the first aspect.

It may be understood that the foregoing technical solutions provided in the second aspect to the sixth aspect in this application may separately correspond to the technical solution provided in any one of the first aspect and the possible designs of the first aspect. Beneficial effect that can be achieved is similar, and details are not described herein again.

### BRIEF DESCRIPTION OF DRAWINGS

FIG. 1 is a schematic diagram of an interface;
FIG. 2 is a schematic diagram of storing image data;
FIG. 3 is a schematic diagram of an interface;
FIG. 4 is a schematic diagram of an interface;
FIG. 5 is a schematic diagram of luminance adjustment processing according to an embodiment of this application;
FIG. 6 is a schematic diagram of comparison between E-HDR display effect according to an embodiment of this application;
FIG. 7 is a schematic diagram of E-HDR display effect according to an embodiment of this application;
FIG. 8A to FIG. 8E are a schematic diagram of an interface according to an embodiment of this application;
FIG. 9 is a schematic diagram of storing edited image data according to an embodiment of this application;
FIG. 10 is a schematic diagram of composition of an electronic device according to an embodiment of this application;
FIG. 11 is a schematic diagram of composition of an electronic device according to an embodiment of this application;
FIG. 12 is a schematic diagram of interaction between modules for implementing graffiti preview according to an embodiment of this application;
FIG. 13 is a schematic diagram of a logic for implementing editing content storage according to an embodiment of this application;
FIG. 14 is a schematic diagram of interaction between modules for delivering an image saving task according to an embodiment of this application;
FIG. 15 is a schematic diagram of obtaining SDR image data of an edited image according to an embodiment of this application;
FIG. 16 is a schematic diagram of obtaining luminance graph data of an edited image according to an embodiment of this application;
FIG. 17 is a schematic diagram of luminance graph fusion according to an embodiment of this application;
FIG. 18 is a schematic diagram of obtaining and storing edited image data according to an embodiment of this application;
FIG. 19A to FIG. 19D are a schematic diagram of interaction between modules of an image processing method according to an embodiment of this application;
FIG. 20 is a schematic diagram of an image editing scenario according to an embodiment of this application;
FIG. 21 is a schematic diagram of comparison between effect of luminance graph adjustment processing in different implementations according to an embodiment of this application;
FIG. 22 is a schematic diagram of composition of an electronic device according to an embodiment of this application; and
FIG. 23 is a schematic diagram of composition of a chip system according to an embodiment of this application.

### DESCRIPTION OF EMBODIMENTS

The following terms "first" and "second" are merely intended for a purpose of description, and shall not be understood as indicating or implying relative importance or implying a quantity of indicated technical features. Therefore, a feature limited by "first" or "second" may explicitly or implicitly include one or more features. In descriptions of embodiments, unless otherwise specified, "a plurality of" means two or more.

Currently, most electronic devices can provide users with functions such as photographing, shot image storage, viewing, and editing, and the like.

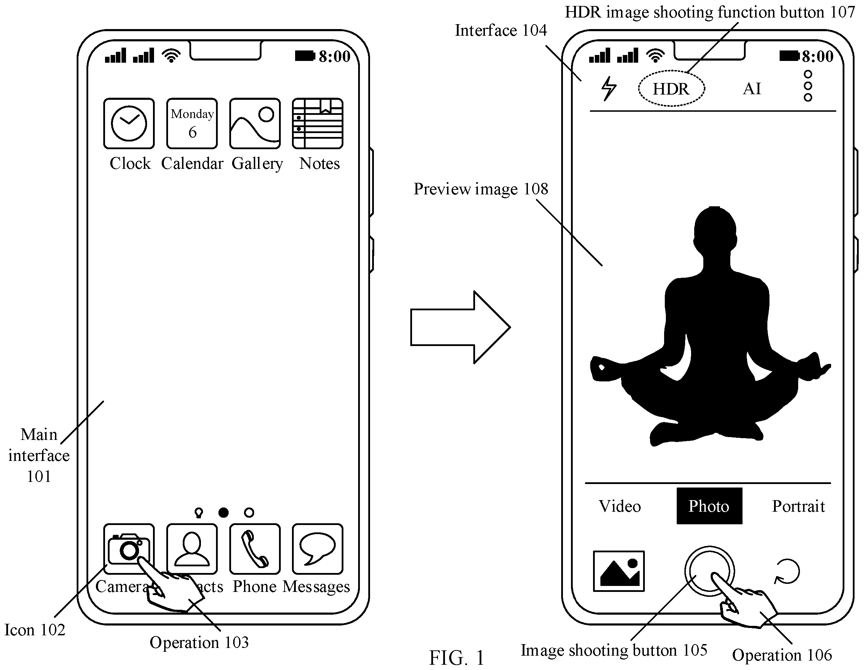

That the electronic device is a mobile phone is used as an example. With reference to FIG. 1, a process of shooting an image by using the electronic device is briefly described.

As shown in FIG. 1, a main interface 101 of the mobile phone may include an icon 102 corresponding to a Camera application. When a user wants to shoot the image, the user may input an operation 103 to the icon 102. For example, the operation 103 may include a touch or tap operation on the icon 102.

In response to the operation 103, the mobile phone may run the Camera application, and invoke a camera to perform image shooting. For example, the mobile phone may switch to display an interface 104. The interface 104 may be an interface of the Camera application. The interface 104 may include a preview image corresponding to an image currently captured by the camera. For example, the image in a scene currently captured by the camera may be an image A, and a preview image 108 corresponding to the image A may be correspondingly displayed on the interface 104. The interface 104 may further include another function option in a photographing process. For example, the interface 104 may include an image shooting button 105.

In a case that the user wants to shoot the image A, the user may input an operation 106, to indicate the mobile phone to shoot and save the current image. The operation 106 may be a touch or tap operation on the image shooting button 105. In response to the operation 106, the mobile phone may store image data of the image A.

It should be noted that, in some cases, the electronic device may provide a high-dynamic range (High-Dynamic Range, HDR) image shooting capability for the user.

In some electronic devices, an HDR image shooting capability may be enabled by default. In this way, HDR-related information may not be displayed on an image shooting interface. In some other electronic devices, an HDR image shooting capability may be configured by the user.

For example, in the example of FIG. 1, the interface 104 may further include a plurality of function buttons displayed above the preview image 108. For example, the plurality of function buttons may include an HDR image shooting function button 107. In the example of FIG. 1, if a status of the HDR image shooting function button 107 is displayed as "HDR", it is indicated that a current HDR image shooting capability is enabled.

It may be understood that, in a case that the HDR image shooting capability is enabled, after shooting the current image, the electronic device may obtain corresponding HDR image data for storage. In comparison with a normal image obtained when the HDR image shooting capability is not enabled, the HDR image data can include more detail information in the image. For example, when the HDR image data is displayed, luminance of a bright area in the image may be higher. Image detail information of a dark part in the image is also rich.

That an HDR image currently obtained through image shooting is the image A shown in FIG. 1 is used as an example. In this case, the electronic device may store the HDR image data under an instruction of the user (for example, an instruction of the operation 106).

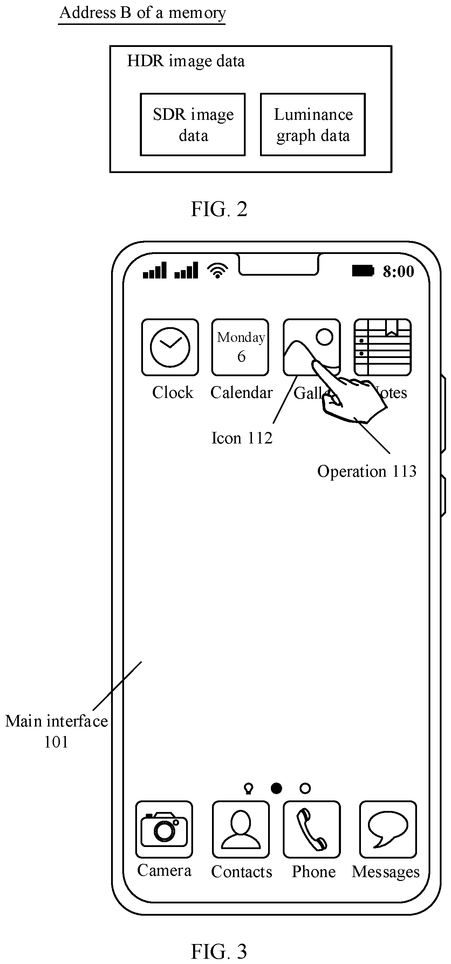

With reference to FIG. 2, when storing the HDR image, the electronic device may simultaneously store two pieces of data corresponding to the current scene in an address (for example, an address B in a memory) corresponding to the image. The data may include a standard dynamic range (Standard Dynamic Range, SDR) image corresponding to the current scenario, and a luminance graph corresponding to the current scenario.

The SDR image may include a plurality of pieces of SDR image data, and each piece of SDR image data may correspond to information such as a color of one pixel.

The luminance graph may include luminance graph data. The luminance graph data may be implemented in a plurality of different forms. The luminance graph data may be obtained by parsing the luminance graph. A file format of the luminance graph may be the same as or different from a file format of the SDR image. For example, the file format of the luminance graph and the file format of the SDR image may be both a JPEG format or the like.

As an example, the luminance graph data may correspond to transparency values of positions in the current scenario. In some implementations, a granularity of the luminance graph data may be the same as a granularity of the SDR image data. That is, one pixel in the luminance graph data may correspond to one pixel in the SDR image data. In some other implementations, a granularity of the luminance graph data may be greater than a granularity of the SDR image data. That is, one pixel in the luminance graph data may correspond to a plurality of pixels in the SDR image data. In this way, a size of the luminance graph is also equivalent to a proportionally reduced size of the SDR image.

Generally, a range of a transparency value may be set to 0 to 255. When the transparency value is larger, transparency is lower (that is, more opaque), and corresponding luminance is higher. On the contrary, when the transparency value is smaller, transparency is higher (that is, more transparent), and corresponding luminance is lower. For example, for a pixel with a transparency value of 255, the pixel is completely opaque and has relatively high luminance. For another example, for a pixel with a transparency value of 0, the pixel is completely transparent and has relatively low luminance.

In different implementations, a correspondence between different transparency values and luminance in the image may be flexibly configured.

In some other implementations of this application, a pixel with a transparency value of 255 may correspond to relatively low luminance. A pixel with a transparency value of 0 may correspond to relatively high luminance.

It should be noted that, because a luminance graph does not include color information, a luminance graph directly drawn based on a transparency value is invisible. In this case, when a luminance graph needs to be viewed, grayscale coloring may be performed based on a transparency value of each pixel. A grayscale image obtained in this way may correspond to the luminance graph.

In a process of performing grayscale coloring, when the transparency value is larger, a corresponding color is lighter and closer to white. On the contrary, when the transparency value is smaller, a corresponding color is darker and closer to black.

Table 1 below shows an example of correspondences that are between transparency values, transparency, luminance, and colors obtained after grayscale coloring and that are in two cases that a transparency value is 0 and a transparency value is 255.

**Table 1**

| Transparency value | Transparency | Luminance | Color obtained after grayscale coloring |
|---|---|---|---|
| 0 | High (completely transparent) | Low | Black |
| 255 | Low (completely opaque) | High | White |

As shown in Table 1, in a transparency image colored based on grayscale, a deeper color corresponds to higher transparency and lower luminance. On the contrary, a lighter color corresponds to higher transparency and higher luminance.

It should be noted that, in this embodiment of this application, the color and the luminance are two different parameters. For example, "white" may be used to indicate that the color of the position is white. However, "luminance" is used to indicate how bright the position is.

The HDR image data is used as an example. Color information of each pixel may be included in the SDR image data. Luminance information (namely, the transparency value) of each pixel may be included in the luminance graph data.

As a scenario example, a white light source is disposed on a white wall. In this case, for a color indicated by the SDR image data, a color of a corresponding position on the white wall may be white, and a color of the white light source may also be white. In luminance distribution indicated by the luminance graph data, luminance of the white wall is lower than luminance of the white light source. In this way, with reference to an image display mechanism of a color and luminance, display effect of different elements in an image can be effectively distinguished.

It should be noted that in some specific scenarios, after performing HDR image shooting, the electronic device may alternatively store only corresponding SDR image data. For example, when the user uses an automatic adjustment function for an image, for example, an automatic beautification function, the electronic device may store only an SDR image corresponding to a current scenario. In this case, if the electronic device needs to use a corresponding luminance graph, the electronic device may obtain the corresponding luminance graph through processing based on each setting parameter during image shooting and SDR image data. In the following example, that HDR image data includes corresponding SDR image data and luminance graph data is used as an example.

In this way, the electronic device may store the HDR image data of the image A in the address B of the memory. It should be noted that, in the foregoing example shown in FIG. 2, that a corresponding SDR image and a luminance graph are separately stored when the HDR image is stored is used as an example for description. In some other implementations, in a case that the HDR image shooting function is disabled, when obtaining a normal image through image shooting, the electronic device may also store a corresponding SDR image and a luminance graph, to facilitate subsequent use.

The electronic device may further provide functions such as viewing and editing of the image A.

As shown in FIG. 3, an icon 112 of a Gallery application may be included in the main interface 101 of the electronic device. The user may input an operation 113 to the icon 112, to indicate the electronic device to open the Gallery, so that the user can view a shot image. The operation 113 may be a tap operation on the icon 112.

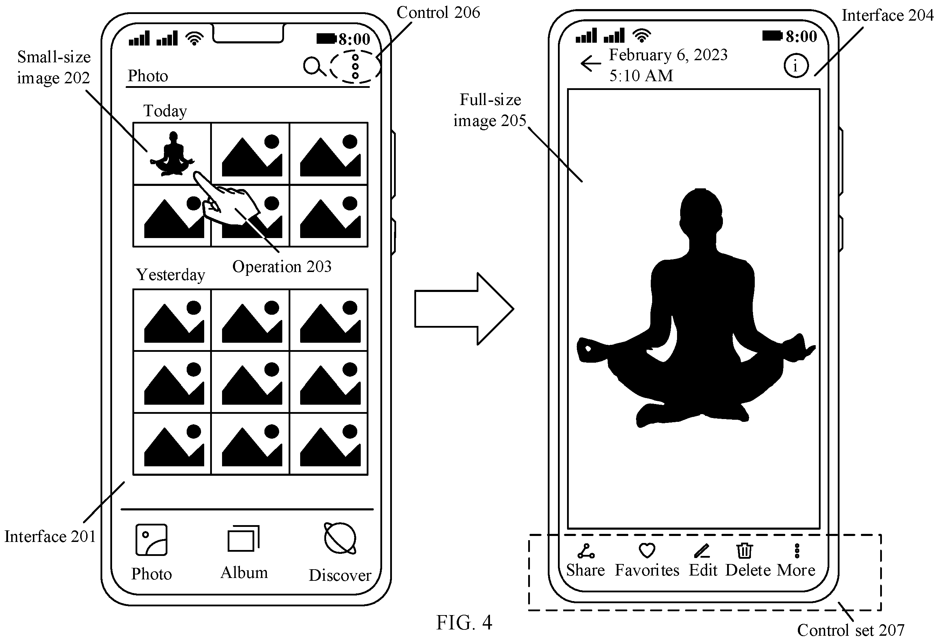

With reference to FIG. 4, in response to the operation 113, the electronic device may run the Gallery application, and switch to display an interface 201 corresponding to the Gallery application.

As shown in FIG. 4, on the interface 201, the electronic device may display the stored image to the user. In some implementations, the stored image may be displayed on the interface 201 in a form of thumbnail (which is referred to as a small-size image for short). For example, the interface 201 may include a small-size image 202 of the stored image A shot by using the scenario example shown in FIG. 1.

When the user wants to zoom in to view the image A, the user may input an operation 203 on the interface 201. The operation 203 may be an operation input to the small-size image 202 of the image A. For example, the operation 203 may be a tap operation.

In response to the operation 203, the electronic device may switch to display an interface 204. The interface 204 may include a zoom-in picture 205 of the image A. Alternatively, the picture may be referred to as a full-size image 205 of the image A. In some implementations, the full-size image 205 of the image A may be a zoom-in picture obtained after the electronic device correspondingly zooms in the small-size image 202 of the image A based on a size of the display after receiving the operation 203.

It may be understood that, with reference to descriptions in FIG. 1 and FIG. 2, data of the image A stored in the electronic device may be the HDR image data. Therefore, after the SDR image data of the image A is displayed, in comparison with normal image data obtained in a normal image shooting mode, the full-size image 205 shown in FIG. 4 may include more detail information.

In some implementations of this application, the electronic device may further provide a E-HDR display capability. Based on the E-HDR display capability, the electronic device may adjust, based on a luminance graph of a currently displayed image, display luminance of a display unit at a corresponding position on the display in an image display process. In this way, when the user views the image by using the display of the electronic device, HDR display experience of brighter highlights can be obtained. In this application, an operation mechanism of adjusting the luminance of the display unit based on the luminance graph may also be referred to as luminance adjustment processing.

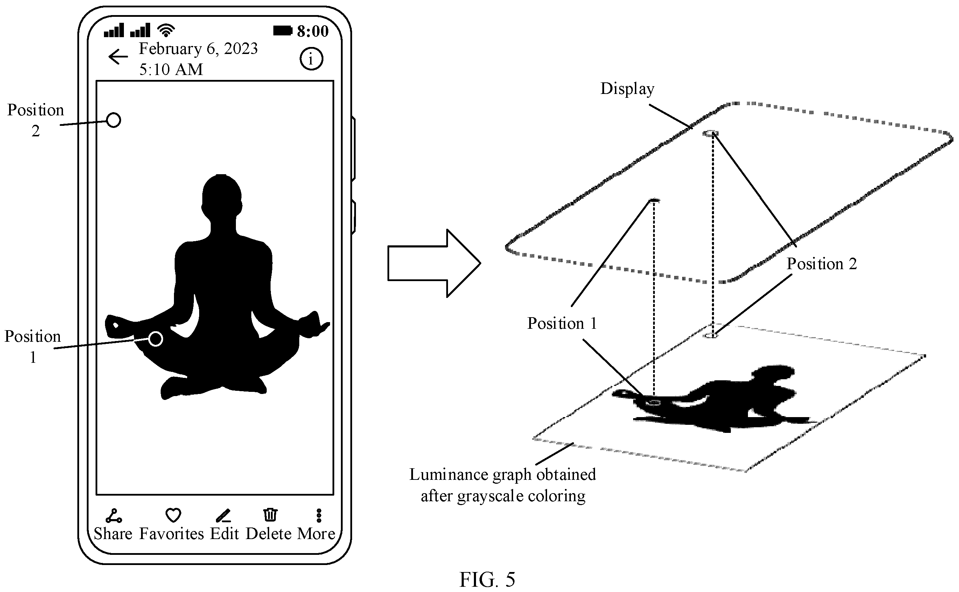

With reference to FIG. 5, that the image A includes a position 2 with relatively high luminance and a position 1 with relatively low luminance is used as an example. Correspondingly, after grayscale coloring is performed on the luminance graph of the image A, a color of the position 1 is closer to black, and a color of the position 2 is closer to white.

When E-HDR display is performed, the position 2 is used as an example. The electronic device may increase luminance of a display unit at the position 2 on the display by a specific multiple or to a specific value, so that when the user views the image A by using the display, view effect of higher luminance is obtained at the position 2. For a display unit at a corresponding position of the position 1 on the display, the electronic device may not increase luminance of the display unit, or a degree of increasing luminance of the display unit is less than a degree of increasing luminance of a position corresponding to the position 2. In this way, HDR display effect of the image A can be obtained. In this application, the HDR display effect obtained through luminance adjustment processing may also be referred to as E-HDR display effect. The E-HDR display effect of the image may be as follows: When the user views the image by using the electronic device, visual experience of brighter highlights can be obtained.

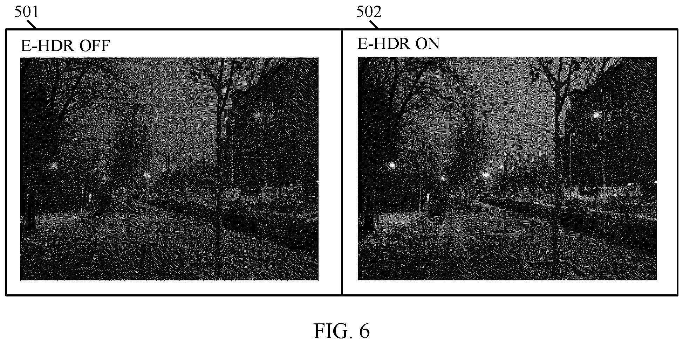

As a specific example, FIG. 6 provides comparison between display effect that is in an actual scenario and that is obtained in cases that a E-HDR function is enabled and disabled. An image in a E-HDR OFF case provided by 501 is the display effect in a case that the E-HDR function is disabled. An image in a E-HDR ON case provided by 502 is the display effect in a case that the E-HDR function is enabled.

Apparently, in the display effect of 502, a highlight (for example, an area near a street lamp) in an image is brighter than display effect of a same position of 501. The display effect in 502 is also more clearly displayed.

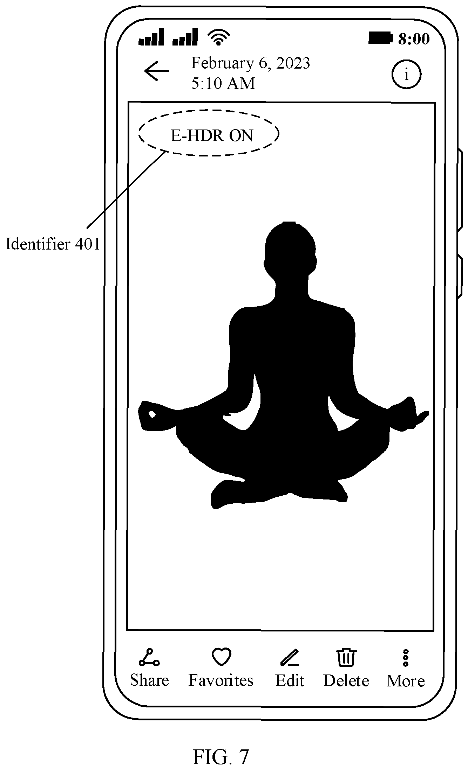

To enable the user to learn that the E-HDR function is enabled for viewing a current full-size image, as shown in FIG. 7, in some embodiments, an identifier 401 may be displayed in the full-size image. The identifier 401 may be used to prompt the user that the E-HDR function is currently enabled, that is, current display effect has integrated the luminance adjustment processing shown in FIG. 5. In some other implementations, in order not to affect viewing performed by the user on the full-size image, the electronic device may not display the identifier 401 even if the E-HDR function is enabled.

It may be understood that, in different implementations, enabling and disabling of the E-HDR function may be enabled by default. Alternatively, the E-HDR function may be enabled or disabled by the user.

In the foregoing example, an image shooting and viewing process of the image A is described. In some cases, the electronic device may further provide an image editing capability for the user.

For example, in some implementations, the interface 201 shown in FIG. 4 may include a control 206. The control 206 may provide a display control interface for all images in the Gallery. For example, the user may set a sorting rule of each small-size image and the like by tapping the control 206.

In some other implementations, the interface 204 shown in FIG. 4 may include a control set 207. The control set 207 may include a plurality of controls. Different controls can provide different functions. For example, a "Share" control is used to provide an image sharing function for the full-size image 205. For another example, an "Edit" control is used to provide an image editing function for the full-size image 205, and the like.

The "Edit" control shown in FIG. 4 is used as an example.

In the "Edit" control of the image, a plurality of different image processing functions can be provided for the user.

For example, by using the "Edit" control, the electronic device may provide image processing functions such as a rotation function, a trimming function, a filter function, and a graffiti function for the user.

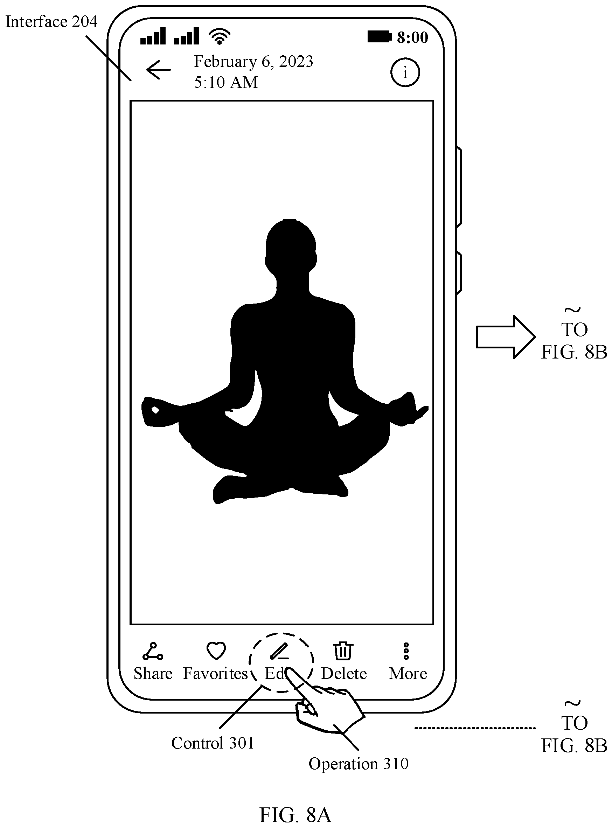

With reference to FIG. 4 and FIG. 8A to FIG. 8E, that the user uses the graffiti function is used as an example.

As shown in FIG. 8A, the user may input an operation 310 on the interface 204, so that the image enters an editing state.

The operation 310 may be an operation on the control 301, for example, a tap operation. The control 301 may correspond to the foregoing "Edit" control. By using the control 301, the current image (the full-size image 205 shown in FIG. 4) may enter an editing state.

In response to the operation 310, the electronic device may switch to display an interface 302. The interface 302 may be an interface obtained after the full-size image 205 enters the editing state.

In the interface 302, the image A may be displayed, so that the user determines that the image A is currently being edited. The interface 302 may further include a control set 303. The control set 303 may include a plurality of sub-controls. Each sub-control corresponds to a function under the "Edit" control.

For example, the control set 303 may include a sub-control corresponding to the rotation function, a sub-control corresponding to the trimming function, a sub-control corresponding to the filter function, and a sub-control corresponding to the graffiti function. That the sub-control corresponding to the graffiti function is a control 304 is used as an example.

The user may input an operation 320 on the interface 302 to trigger a function in the control set 303.

For example, in this example, that the operation 320 is used to trigger the graffiti function is used as an example. As an example, the operation 320 may be a tap operation on the sub-control 304. In this way, the operation 320 may trigger the electronic device to perform graffiti processing on the currently displayed image A.

In response to the operation 320, the electronic device may enter a graffiti interface 305 corresponding to the image A.

In the graffiti interface 305, the user may perform graffiti editing on the image A.

For example, the user may touch the display of the electronic device, to slide along a track 306 on the image A, that is, input an operation 330, to indicate the electronic device to draw graffiti along the track 306 on the image A.

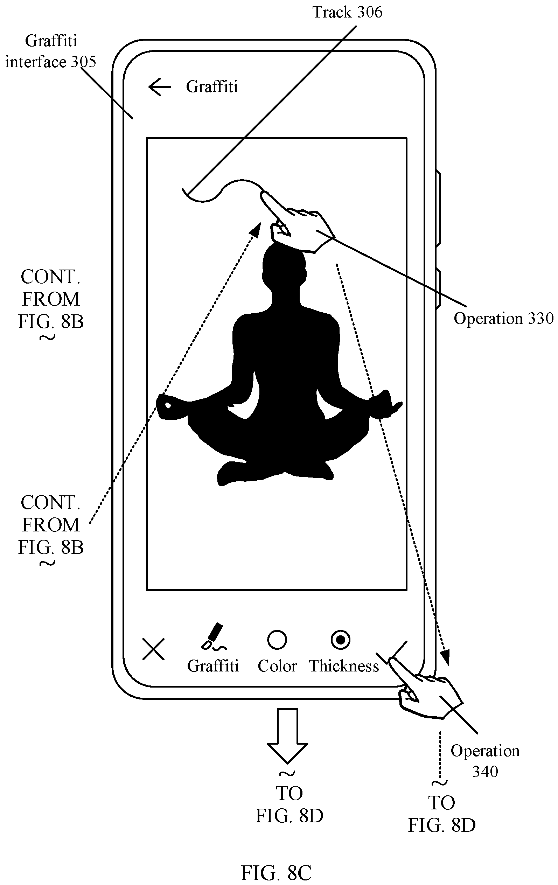

After graffiti editing is completed, the user may input a determining operation on the interface 305, to indicate to the electronic device that the current graffiti editing is completed. For example, the determining operation may correspond to an operation 340 shown in FIG. 8C.

In response to the operation 340, the electronic device may jump to display an interface 307. It can be seen that in the interface 307, graffiti effect input by the user along the track 306 is already displayed on a full-size image of the image A.

After determining the graffiti effect, the user may input an operation 350 to indicate to the electronic device that editing of the image A is completed. For example, the operation 350 may correspond to an operation input by the user on a "Save" button on the interface 307.

In response to the operation 350, the electronic device may save image data including editing effect (for example, the graffiti effect input along the track 306) and the image A. The editing effect may also be referred to as editing content, and the graffiti effect may also be referred to as graffiti content.

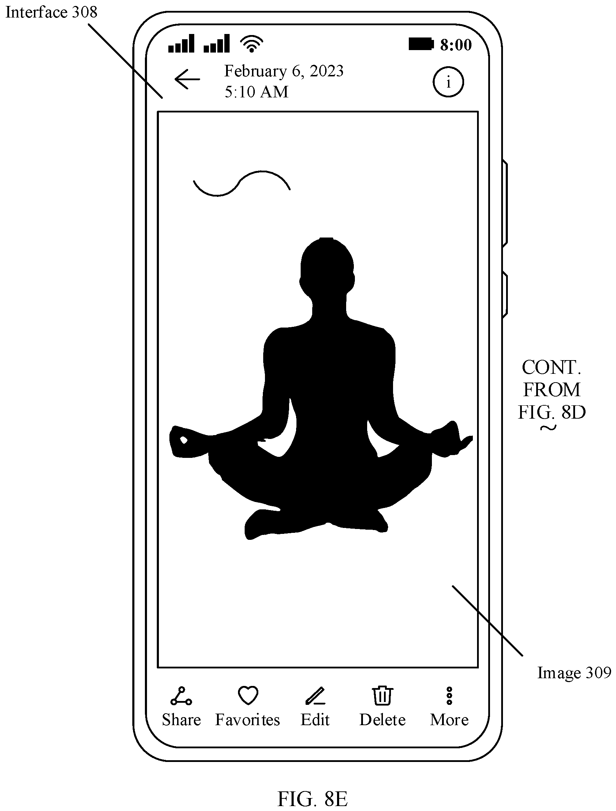

In some implementations, after receiving the operation 350, the electronic device may jump to display an interface 308. A full-size image of the image A including editing effect may be displayed on the interface 308. For example, the full-size image of the image A may be an image 309 shown in FIG. 8E. In this example, the image 309 may also be referred to as an edited image. Correspondingly, the image A obtained before editing may be referred to as an original image.

It should be noted that, in the example shown in FIG. 7, an image graffiti operation may be performed based on an SDR image of the image. For example, although the image A is obtained by using the HDR image shooting function, the SDR image data and luminance graph data of the image A are also stored in the memory of the electronic device. During an editing operation such as a graffiti operation, the electronic device also performs, based on the SDR image, composition and display of each piece of editing content.

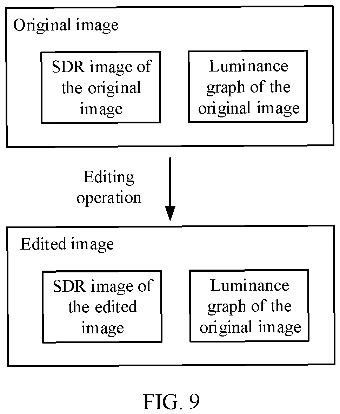

In other words, as shown in FIG. 9, after an editing operation is performed on the original image, an obtained SDR image of the edited image may be an SDR image that fuses the editing content. For example, the SDR image of the original image may be the full-size image that is of the image A and that is displayed on the interface 204 in FIG. 8A. The edited image may be the image 309 displayed on the interface 308 in FIG. 8E. The image 309 may include the graffiti content input in an editing process.

As shown in FIG. 9, a luminance graph of the edited image does not reflect information related to the editing operation. For example, the luminance graph of the edited image may be the same as the luminance graph of the original image.

With reference to an example of a related solution of the E-HDR function provided in FIG. 5 to FIG. 7, luminance adjustment of the display unit on the display is performed based on transparency values of different positions indicated by the luminance graph, but luminance graph data of the edited image cannot accurately reflect transparency values related to the editing content. Consequently, when luminance adjustment processing corresponding to the E-HDR function is performed on the edited image based on the stored luminance graph data of the edited image, the edited image cannot well correspond to content to be displayed on the edited image.

To resolve the foregoing problem, an embodiment of this application provides an image processing method. In this solution, editing content of an editing operation such as a graffiti operation is fused to a luminance graph of an original image, to obtain a luminance graph of an edited image. The editing content is fused into the luminance graph of the edited image, so that luminance graph data of each position on an editing content path (namely, an editing path) can be updated. In this example, after the image is edited, a transparency value on the editing path may decrease, that is, luminance decreases. For example, transparency of a position on the original image is 30. When the editing path passes through the position, a transparency value of an edited position may be less than 30, for example, 20. In this way, based on the luminance graph of the edited image and an SDR image that is of the edited image and that includes the editing content, an electronic device can accurately perform luminance adjustment processing of a display unit on a display when displaying the edited image, thereby obtaining E-HDR display effect of the edited image.

It should be noted that the electronic device in this embodiment of this application may be an intelligent switch, an electronic switch, a mobile phone, a tablet computer, a desktop computer, a laptop computer, a handheld computer, a notebook computer, a vehicle-mounted device, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or the like. A specific form of the electronic device is not specifically limited in embodiments of this application.

In some embodiments, the electronic device may have the following structure composition.

The electronic device may include a processor, an external memory interface, an internal memory, a universal serial bus (universal serial bus, USB) connector, a charging management module, a power management module, a battery, an antenna 1, an antenna 2, a mobile communication module, a wireless communication module, an audio module, a speaker, a receiver, a microphone, a headset jack, a sensor module, a button, a motor, an indicator, a camera module, a display, a subscriber identification module (subscriber identification module, SIM) card interface, and the like. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The processor may generate an operation control signal based on instruction operation code and a time sequence signal, to control instruction reading and instruction execution.

A memory may be further disposed in the processor, and is configured to store instructions and data. In some embodiments, the memory in the processor may be a cache. The memory may store instructions or data that has been used by the processor or that is used at a high frequency. If the processor needs to use the instructions or the data, the processor may directly invoke the instructions or the data from the memory. This avoids repeated access, and reduces a waiting time of the processor, thereby improving system efficiency.

The display in the electronic device is configured to display an image, a video, and the like. The display includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or more displays.

In an example, in this application, the display of the electronic device may have a partition dimming capability. For example, the electronic device may perform differential configuration based on a luminance graph of a currently displayed image and luminance of different positions on the display. In this way, even if the image is not adjusted, E-HDR effect in a process may be displayed. For example, the display may be an OLED screen.

It may be understood that the foregoing schematic structure does not constitute a specific limitation on the electronic device. In some other embodiments of this application, the electronic device may include more or fewer components than those in the foregoing examples, or some components may be combined, or some components may be split, or components are arranged in different manners. The foregoing components may be implemented by using hardware, software, or a combination of software and hardware.

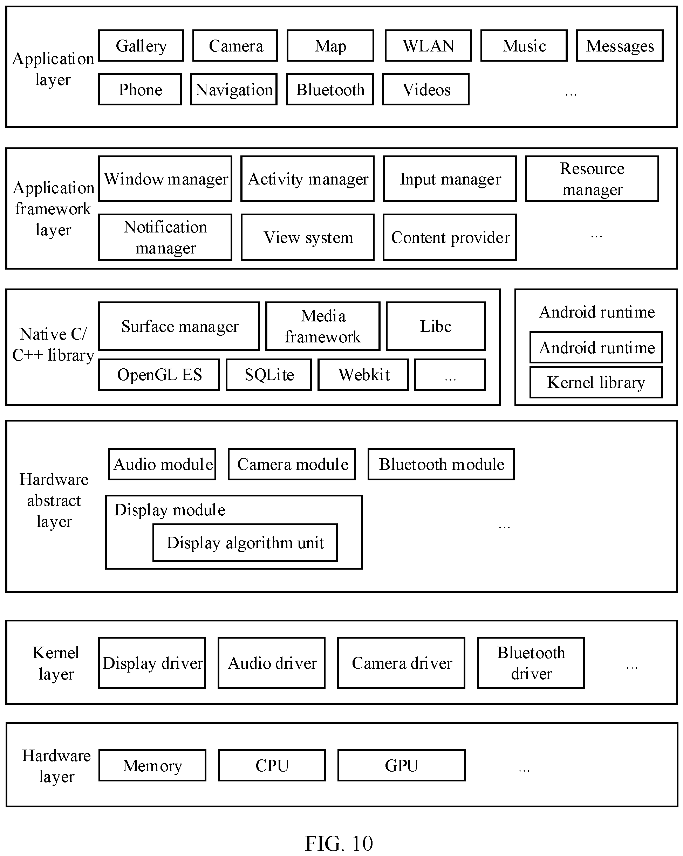

In some embodiments, the electronic device may have software composition shown in FIG. 10.

For example, in the example provided in FIG. 10, an operating system or a software storage system may run in the electronic device. The software system may use a layered architecture, an event-driven architecture, a microkernel architecture, a microservice architecture, or a cloud architecture. In this embodiment of this application, an Android^{®} system with the layered architecture is used as an example to describe a software structure of the electronic device.

As shown in FIG. 10, software is divided into several layers by using a layered architecture, and each layer has a clear role and task. The layers communicate with each other by using a software interface. In some embodiments, the Android^{®} system is divided into five layers: an application layer, an application framework layer, an Android runtime (Android runtime, ART) and a native C/C++ library, a hardware abstract layer (Hardware Abstract Layer, HAL), and a kernel layer from top to bottom.

The application layer is referred to as an app layer, an application layer, or an APP layer for short.

The application layer may include a series of application packages.

As shown in FIG. 10, the application package may include Gallery. In some implementations, the application package may further include applications such as Camera, Map, WLAN, Music, Messages, Phone, Navigation, Bluetooth, and Videos.

The application framework layer is referred to as a framework layer or a Framework layer for short.

The application framework layer provides an application programming interface (application programming interface, API) and a programming framework for an application at the application layer. The application framework layer includes some predefined functions.

As shown in FIG. 10, the application framework layer may include a window manager, a content provider, a view system, a resource manager, a notification manager, an activity manager, an input manager, and the like.

The window manager provides a window manager service (Window Manager Service, WMS), and the WMS may be used for window management, window animation management, surface management, and as a transfer station for an input system. The content provider is configured to: store and obtain data, and enable the data to be accessed by an application. The data may include a video, an image, audio, calls made and answered, a browsing history and bookmarks, an address book, and like. The view system includes visual controls such as a control for displaying a text and a control for displaying an image. The view system may be configured to construct an application. A display interface may include one or more views. For example, a display interface including a Messages notification icon may include a view for displaying a text and a view for displaying an image. The resource manager provides various resources such as a localized character string, an icon, an image, a layout file, and a video file for an application. The notification manager enables an application to display notification information in a status bar, and may be configured to convey a notification message. The notification manager may automatically disappear after a short pause without needing user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on a screen in a form of dialog window. For example, text information is displayed in the status bar, an announcement is given, the electronic device vibrates, or an indicator light blinks. The activity manager may provide an activity manager service (Activity Manager Service, AMS), and the AMS may be used to start, switch, and schedule system components (such as an activity, a service, a content provider, and a broadcast receiver), and manage and schedule application processes. The input manager may provide an input manager service (Input Manager Service, IMS). The IMS may be used to manage a system input, for example, a touch screen input, a button input, and a sensor input. The IMS obtains an event from an input device node, and allocates the event to an appropriate window through interaction with the WMS.

The Android runtime includes a kernel library and an Android runtime. The Android runtime is responsible for converting source code to a machine code. The Android runtime mainly includes using an ahead or time (ahead or time, AOT) compilation technology and a just in time (just in time, JIT) compilation technology.

The kernel library is mainly configured to provide basic Java class library functions, for example, a basic data structure, a math library, an I/O library, a tool library, a database, a network library, and another library. The kernel library provides an API for a user to develop an Android application.

The native C/C++ library may include a plurality of function modules, for example, a surface manager (surface manager), a media framework (Media Framework), libc, OpenGL ES, SQLite, and Webkit.

The surface manager is configured to manage a display subsystem, and provide fusion of 2D and 3D layers for a plurality of applications. The media framework supports playback and recording in a plurality of common audio and video formats, and supports a static image file and the like. The media library may support a plurality of audio and video encoding formats, for example, MPEG4, H.264, MP3, AAC, AMR, JPG, and PNG. The OpenGL ES is used for drawing and operating 2D and 3D graphics in applications. The SQLite provides a lightweight relational database for applications of the electronic device.

The hardware abstract layer, namely, a hardware abstract layer, is referred to as a HAL for short. The hardware abstract layer runs in user space (user space), encapsulates a kernel layer drive, and provides an invoking interface to an upper layer.

As shown in FIG. 7, the hardware abstract layer may include an audio module, a camera module, a Bluetooth module, and the like.

In this example, the hardware abstract layer may further include a display module.

In some embodiments, a display algorithm unit may be disposed in the display module. One or more display-related policies may be set in the display algorithm unit.

For example, the display algorithm unit may include an HDR effect determining policy. An application (for example, the Gallery application) may determine, by interacting with the display algorithm unit and based on the HDR effect determining policy, whether luminance adjustment processing needs to be performed on a currently displayed image, to obtain corresponding E-HDR display effect.

For another example, the display algorithm unit may include an HDR effect luminance policy. Based on the HDR effect luminance policy, the display algorithm unit may provide a luminance adjustment parameter corresponding to each display unit on the display in a current luminance adjustment processing process.

The kernel layer is a layer between hardware and software. The kernel layer includes at least a display driver, a camera driver, an audio driver, and a Bluetooth driver.

In the example of FIG. 10, a hardware layer under the kernel layer is also shown. It may be understood that when the electronic device needs to invoke some hardware functions, a command may be transmitted downward layer by layer through one or more layers of the following: the application layer, the application framework layer, the native C/C++ library, the hardware abstract layer, and the kernel layer. Finally, the command is sent to a corresponding hardware component in the hardware layer by using the kernel layer. In this way, the hardware component can provide a corresponding hardware function according to the received command.

For example, as shown in FIG. 10, the hardware layer may include a memory configured to store data, a CPU configured to perform instruction processing and distribution, a GPU configured to perform image processing, and the like.

In some embodiments, the memory shown in FIG. 10 may correspond to at least one of the following: the foregoing internal memory, an external memory connected through the external memory interface, and on-chip storage space.

It should be noted that the composition provided in FIG. 10 is merely an example, and does not constitute any limitation on the electronic device in this embodiment of this application. In some other embodiments, the electronic device may alternatively have more or fewer modules or components than those shown in FIG. 10, to implement various functions provided in embodiments of this application.

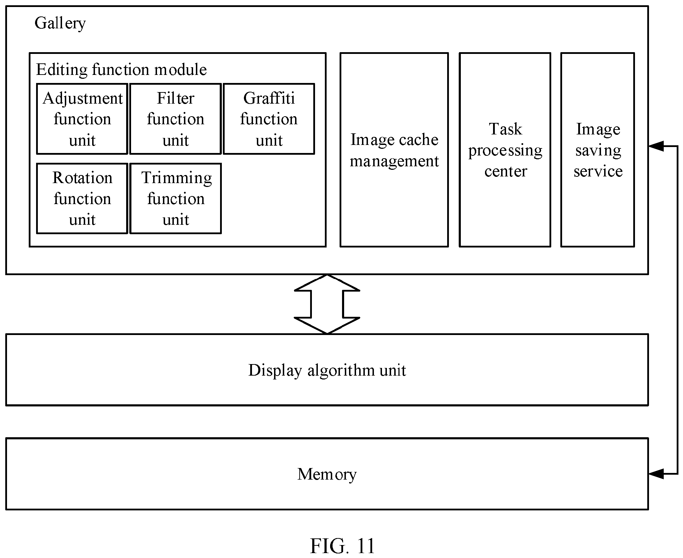

For example, refer to FIG. 11. In some embodiments of this application, a plurality of different function modules may be disposed in the Gallery application at the application layer, to obtain and store an edited image after an editing operation, for example, to obtain an SDR image of the edited image and obtain a luminance graph of the edited image.

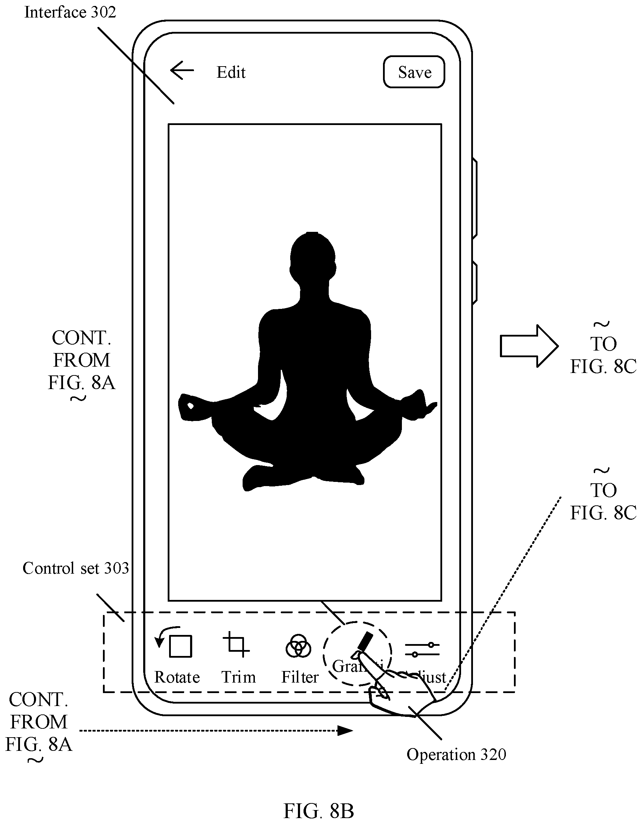

As shown in FIG. 11, in this example, an editing function module may be disposed in the Gallery. The editing function module is mainly configured to support various editing functions in the control set 303 shown in FIG. 8B.

In this example, the editing function module may include: an adjustment function unit, configured to support luminance and contrast adjustment functions on an image; a filter function unit, configured to support a filter adjustment function on an image; a graffiti function unit, configured to support a graffiti editing function on an image; a rotation function unit, configured to support a horizontal/vertical adjustment function on an image; and a trimming function unit, configured to support a trimming and editing function on an image.

As shown in FIG. 11, the Gallery application may further include image cache management. The image cache management may be configured to: in a process of editing an image by the user, draw a corresponding image in cache based on an operation input by the user. This facilitates updating a preview to the user based on the image drawn in the cache.

A task processing center in the Gallery application may be configured to receive, package, and deliver each task.

An image saving service may be configured to: after the user completes editing, provide a processing storage capability of a new image including editing content and an SDR image for the user. In some implementations, the image saving service may save an original image and editing content on the original image together as a new edited image. The edited image may also include a corresponding SDR image and a luminance graph. The SDR image of the edited image may be obtained based on the editing content and an SDR image of the original image. The luminance graph of the edited image may be obtained based on a luminance graph of the original image and the editing content. The SDR image of the edited image and the luminance graph of the edited image may be used to accurately provide E-HDR display effect of the edited image for the user.

In a process in which the Gallery application implements the foregoing functions, the Gallery application may interact with the display algorithm unit in the HAL, to determine parameters in a specific operation process, for example, whether luminance adjustment processing needs to be performed in a current editing operation. For another example, the display algorithm unit in the HAL may further provide a luminance adjustment parameter and the like in a luminance graph adjustment processing process.

In addition, in a process in which the Gallery application implements the foregoing functions, the Gallery application may further interact with the memory of the electronic device. In this way, the editing content, the SDR image and the luminance graph of the original image, the SDR image and the luminance graph of the edited image are stored in the memory, to facilitate invoking by another module.

It should be noted that, in the example shown in FIG. 11, that each function module is disposed in the Gallery application is used as an example. That is, in this example, code corresponding to each function module may be integrated into an application package of the Gallery application. In some other embodiments, one or more of the foregoing function modules may alternatively be disposed in the framework layer of the electronic device. In this way, after the electronic device is powered on and runs the operating system, the foregoing functions may be implemented in cooperation with the applications installed at the application layer.

In the following example, that the electronic device is applied to the electronic device shown in FIG. 10 and the electronic device includes the logical framework shown in FIG. 11 is used as an example, to describe the solution provided in this embodiment of this application in detail.

It should be noted that, as in the foregoing example, the Gallery application provides a plurality of editing functions. In the following example, a graffiti function is used as an example to describe an implementation of the editing function. It may be understood that an implementation of another editing function is similar to the implementation of the graffiti function, and reference may be made to each other. Details are not described again.

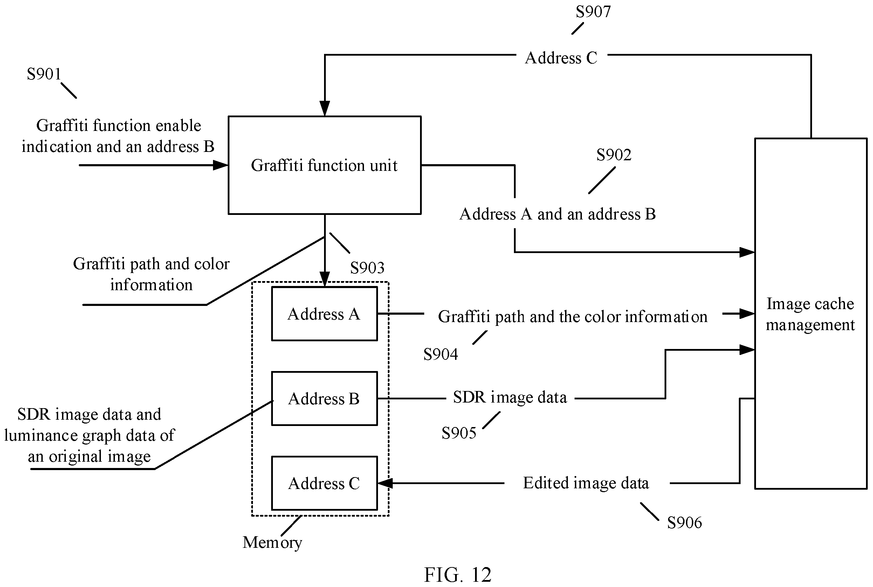

FIG. 12 is a schematic diagram of interaction between modules. Based on the solution provided in FIG. 12, the electronic device may implement update of a preview image and drawing in a graffiti process.

As shown in FIG. 12, the solution may include the following steps.

S901: The Gallery application generates a graffiti function enable indication, and sends the graffiti function enable indication and an address B to the graffiti function unit.

The address B may store a storage address of an SDR image of a current original image (for example, the image A). With reference to the foregoing description, in a case that the image A is an HDR image, the address B may further store a luminance graph corresponding to the image A.

With reference to the examples in FIG. 1 to FIG. 4, in this example, after receiving the operation 103 and the operation 203 shown in FIG. 1 and FIG. 2 that are input by the user, the electronic device may display the interface 204 shown in FIG. 4. The interface 204 may include the full-size image 205 of the image A.

In some embodiments, the full-size image 205 may be displayed based on the SDR image of the image A. Alternatively, display of the full-size image 205 may be implemented by the electronic device after the luminance adjustment processing shown in FIG. 5.

With reference to FIG. 8A and FIG. 8B, after the user inputs the operation 310 and the operation 320, the electronic device may determine that a graffiti function interface needs to be entered.

In response to the operation 320, the Gallery application of the electronic device may generate a graffiti function enable indication. The Gallery application may send the graffiti function enable indication to the graffiti function unit, so that the graffiti function unit completes initialization, to further provide support for a subsequent graffiti operation.

In this example, the electronic device may further send, to the graffiti function unit, an address (such as the address B) that stores the SDR image of the current displayed image, so that the graffiti function unit can obtain the SDR image from the address B for subsequent processing.

S902: The graffiti function unit stores, in an address A of the memory, graffiti information input by the user. The address A may be an address in storage space configured in the memory for the graffiti function.

For example, the graffiti information may include a graffiti path, color information selected in current editing, and the like.

With reference to the example of FIG. 8C, the graffiti path may be the track 306. The color information selected in the current editing may also correspond to a color setting in the interface 305.

S903: The graffiti function unit sends the graffiti information and SDR image information to the image cache management.

In this example, sending of the graffiti information and the SDR image data may be implemented in a manner of sending a storage address of the graffiti information and a storage address of the SDR image data.

For example, the graffiti path and the color information that are included in the graffiti information may be stored in the address A, and the SDR image data of the image A may be stored in the address B. In this case, the graffiti function unit may send the address A and the address B to the image cache management.

S904: The image cache management obtains the graffiti information.

For example, the image cache management may obtain, from the address A, the graffiti information that includes graffiti-related content such as the graffiti path and the color information.

S905: The image cache management obtains the SDR image data.

For example, the image cache management may further obtain, from the address B, the SDR image data corresponding to the current original image (for example, the image A).

S906: The image cache management draws and obtains corresponding edited image data based on the graffiti information and the SDR image data, and stores the edited image data to an address C. Similar to the address A, the address C may be an address in the storage space configured in the memory for the graffiti function. The edited image data stored in the address C may be SDR image data of an edited image.

In this example, the image cache management may create a blank map on the address C, and draw an SDR image obtained from the address B on the blank map of the address C. The image cache management may further draw, based on the graffiti information such as the graffiti path and the color information, graffiti content input by the user on the SDR image on a map of the address C.

In this way, on the newly created map of the address C, an image including the SDR image of the image A and the graffiti content may be obtained.

The electronic device may display image content on the newly created map of the address C on the display. In this way, image preview update in the graffiti process is implemented.

For example, with reference to FIG. 8A to FIG. 8E, after the electronic device displays image data on the newly created map of the address C, the interface 305 shown in FIG. 8C may be displayed.

It may be understood that when the user needs to continue to input other graffiti content, the electronic device may repeatedly perform the foregoing S901 to S906 and a subsequent display sending operation, thereby implementing preview update in the graffiti process.

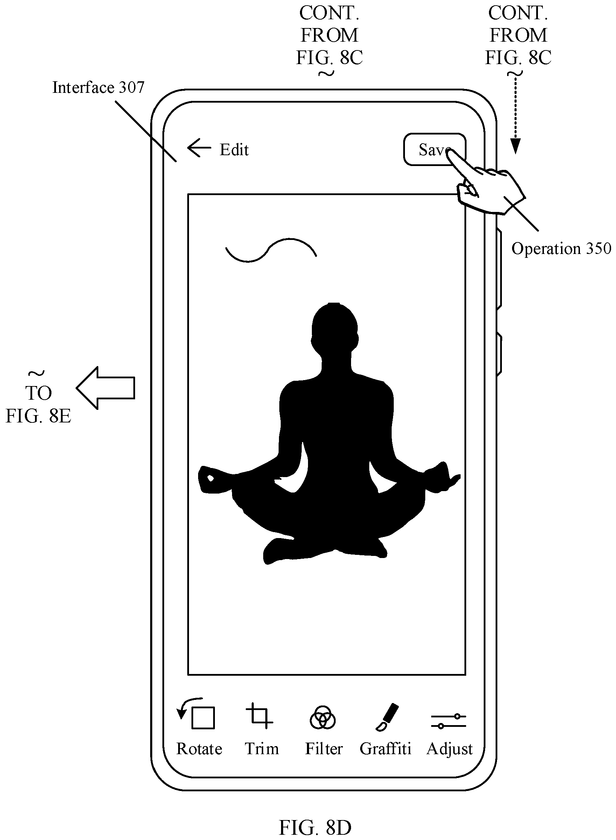

With reference to the description in FIG. 8A to FIG. 8E, after using an editing function such as the graffiti function provided by the Gallery application, the user may save an editing result, for example, input the operation 340 and the operation 350 shown in FIG. 8C and FIG. 8D.

In response to the operation 350, the electronic device may store the edited image. The edited image may include the SDR image of the original image and the editing content. That the editing operation is to graffiti is used as an example. In this case, the edited image may include the SDR image and the graffiti content. For example, the edited image may correspond to the image 309 shown in FIG. 8E.

It should be noted that, in some implementations, storage of the edited image and update of the preview image shown in FIG. 12 may be in two different processes. For example, drawing and obtaining of the preview image shown in FIG. 12 may be performed in the address C. When the preview image needs to be updated, the map on the address C may correspondingly overwrite the previous data to perform update, to update the preview image based on updated data. In other words, image data on the address C changes according to a current display requirement.

However, a storage operation of the edited image may be performed based on another address different from the address C.

For example, a storage operation of the edited image may include drawing and storage on a map on an address D in the memory.

It may be understood that, after the storage operation of the edited image is completed, image data stored in the address D does not change, and is also not overwritten by other image data. Only after the user inputs an indication for deleting a stored image, the electronic device frees up storage space of the address D and deletes the image data stored in the address D or overwrites the image data with other data.

In the following example, an implementation of a storage process of the edited image is further described by using an example with reference to the logical composition shown in FIG. 11.

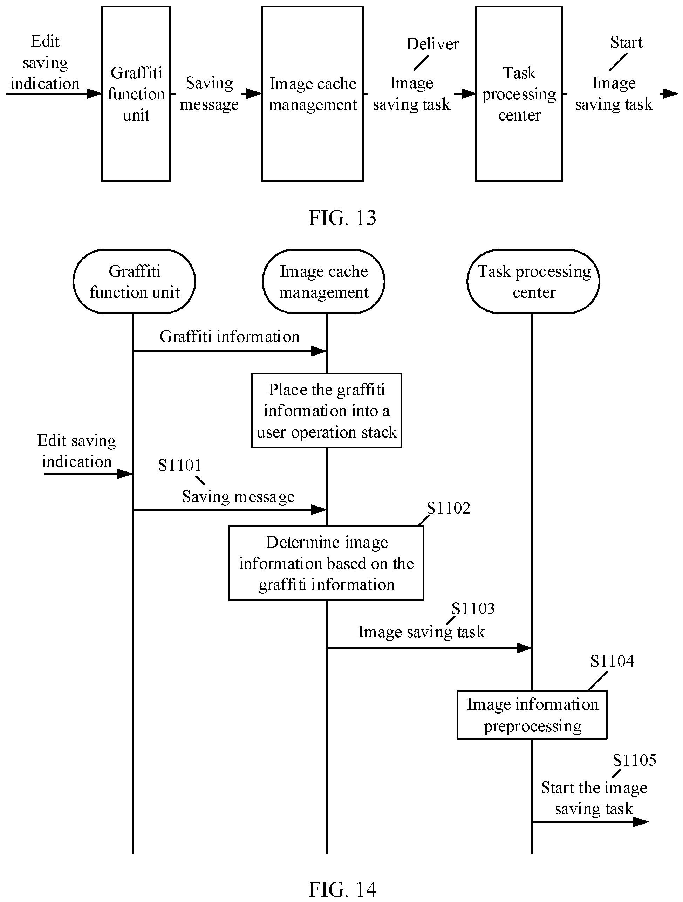

For example, refer to FIG. 13. When storing the edited image, the graffiti function unit may receive a graffiti saving indication. Correspondingly, the graffiti function unit may deliver a saving message to the image cache management, to indicate the image cache management to perform the storage operation of the edited image. The image cache management may deliver an image saving task to the task processing center. Correspondingly, the task processing center may obtain, for information that indicates that image saving needs to be performed and that is carried in the image saving task, an image parameter required in a process of executing the image saving task. Then, the task processing center may start, based on the image parameter, a thread corresponding to the image saving task, so that another component (such as the image saving service) runs the thread, to implement storage of the edited image.

The following describes in detail a storage process of the edited image shown in FIG. 14 with reference to a schematic diagram of an interaction procedure between modules provided in FIG. 13.

As shown in FIG. 14, the solution may include the following steps.

S1101: The graffiti function unit sends the saving message to the image cache management.

For example, after receiving an edit saving indication, the graffiti function unit may send the saving message to the image cache management.

In some embodiments, the image saving message may include an identifier corresponding to completion of an editing operation, so that the image cache management may determine, based on the identifier, that current editing is completed, and a corresponding image needs to be stored.

In this application, the edit saving indication may be generated by the Gallery application. For example, with reference to FIG. 8D, the Gallery application may generate the edit saving indication when receiving the operation 350 input by the user.

It may be understood that, in the example shown in FIG. 8A to FIG. 8E, the editing operation may include a plurality of operations. For example, after inputting the graffiti operation corresponding to the interface 305, the user may use another sub-control in the control set 303 for image editing. After completing all editing operations, the user inputs the operation 350. In this way, the Gallery application may trigger generation of the edit saving indication based on the operation 350.

However, when current editing of the image A by the user includes only a graffiti operation corresponding to the operation 330, the Gallery application may also trigger generation of the edit saving indication when receiving the operation 340 input by the user.

In the following description, that editing performed by the user this time on the image A includes only the graffiti operation corresponding to the operation 330 shown in FIG. 8C is used as an example.

It should be noted that, as shown in FIG. 14, in some implementations of this application, before receiving the edit saving indication, the graffiti function unit may further send graffiti information of the graffiti operation input by the user to the image cache management in batches or at a time.

Correspondingly, the image cache management may store the graffiti information for subsequent use.

For example, the image cache management may place the received graffiti information into a user operation stack.

It may be understood that, as a data structure, the stack is a special linear table that can only be performed insertion and deletion operations at one end. Therefore, the received graffiti information is sequentially stored in the user operation stack. This can accurately correspond to a sequence of the graffiti information, thereby ensuring accuracy in a subsequent drawing and saving process.

As an example, with reference to FIG. 8C, after the user inputs the operation 330, the graffiti function unit may send a graffiti track (namely, the track 306) corresponding to the operation 330 and currently selected color information to the image cache management. Correspondingly, the image cache management may store the track 306 and the currently selected color information in the user operation stack.

S1102: The image cache management determines image information based on the graffiti information.

For example, the image cache management may perform, based on the identifier in the saving message, out-of-stack processing on all graffiti information corresponding to the current editing operation. In this way, graffiti information of all operations input in the current graffiti editing process is obtained in a sequence input by the user.

In some embodiments, the image cache management may encapsulate all of the graffiti information in the current editing process, to form a data set (or referred to as an editing operation stack). In this way, another module can invoke the data set to determine all operations in the current editing process (namely, all graffiti operations).

In some other embodiments, the image cache management may further encapsulate other image information and the editing operation stack, to obtain image information corresponding to a current original image (for example, the image A).

In an example, the image information may include at least one of the following:
a storage address of the original image, an editing operation stack, image saving quality, an HDR identifier, and the like.

For example, with reference to the example of FIG. 12, the storage address of the original image may be the storage address of the SDR image data of the image A, for example, the address B. The editing operation stack may include the graffiti path, the color information, and the like that are stored in the address A.

In this example, the image information may further include the image saving quality.

It may be understood that, during image saving, the image saving quality may be configured by the user, or may be configured by default in the electronic device. When the image saving quality is higher, an image data volume that is correspondingly saved is larger, and a displayed image is more clear.

In some implementations, the image information may further include the HDR identifier.

The HDR identifier may be a first value or a second value. When the HDR identifier is the first value, a corresponding current original image is an HDR image. When the HDR identifier is the second value, a corresponding current original image is not an HDR image.

With reference to the foregoing brief description of the HDR image, for the HDR image, a storage address of the image in the electronic device may include an SDR image of the image and a luminance graph of the image.

In this example, the image A may be an HDR image, that is, the SDR image and the luminance graph of the image A may be stored in the electronic device. In this case, an HDR identifier of the image A may be the first value.

In the following example, that the image information includes the storage address of the original image, the editing operation stack, and the HDR identifier is used as an example.

S1103: The image cache management sends the image saving task to the task processing center.

For example, the image saving task may be used to indicate to save a currently edited image.

The image saving task may carry image information of the currently to-be-saved edited image.

S1104: The task processing center preprocesses the image information.

It may be understood that the task processing center serves as a receiving and forwarding module of a task, and may be configured to process a command delivered by the Gallery application.

In some embodiments, a task queue may be set in the task processing center. The task queue may store one or more tasks from the Gallery application based on priority and a time sequence of the received tasks.

After obtaining a task processing resource (such as a computing power resource and a storage resource) configured by the electronic device, the task processing center may sequentially extract a task from the task queue, and configure the task for a corresponding service for execution.

In this example, before a task is configured for each service for execution, the task processing center may further preprocess the received task. In this way, a corresponding service can efficiently execute the corresponding task based on preprocessed data.

As an example, the task processing center may preprocess the currently to-be-saved edited image after receiving the image saving task.

For example, the task processing center may parse the encapsulated image information to obtain the storage address of the current original image, the editing operation stack, and the HDR identifier.

With reference to the example in FIG. 12, the task processing center may learn, by parsing the image information of the image A, that the storage address of the image A (namely, the storage address of the SDR image of the image A) is the address B, the editing operation stack includes the graffiti path and the color information that are stored in the address A, and the HDR identifier of the image A is the first value (that is, the image A is the HDR image).

S1105: The task processing center starts the image saving task.

For example, in some embodiments, the task processing center may start the image saving task after determining that the electronic device configures a task processing resource for the image saving task.

In some other embodiments, the task processing center may execute S1105 after completing image information preprocessing. The task processing center may further put the to-be-started image saving task into the task queue, so that after the electronic device configures the task processing resource for the image saving task, the image saving task is automatically run.

In this embodiment of this application, the image saving task started by the task processing center may be executed by the image saving service shown in FIG. 11.

For example, with reference to the example in FIG. 14, the image saving service may obtain, from the image saving task, the image information of the to-be-saved image (namely, the edited image).

The image information may include the storage address of the original image, the editing operation stack, the image saving quality, and the HDR identifier.

The image saving service may separately obtain, based on the image information, the SDR image and the luminance graph of the edited image. In this way, when the edited image needs to be displayed, the electronic device may perform luminance adjustment processing on the display unit of the display based on the luminance graph of the edited image when displaying the edited image, to obtain E-HDR display effect.

The following separately describes an obtaining mechanism of the SDR image of the edited image and an obtaining mechanism of the luminance graph of the edited image by using an example.

For example, in some embodiments, the image saving service may obtain, from the storage address of the original image, the SDR image of the original image obtained before editing. The image saving service may further obtain the editing operation of the user from the editing operation stack. Based on this, the image saving service may draw the SDR image of the edited image in an address pre-configured in the memory.

For example, that the original image obtained before editing is the image A and the editing operation stack is transmitted by using a storage address of the editing operation stack is used as an example.

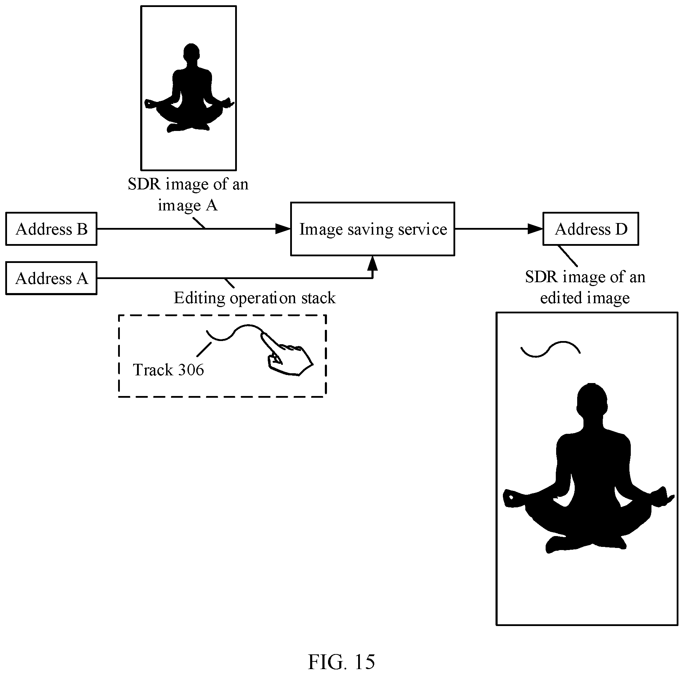

With reference to FIG. 15, the image saving service may obtain the SDR image of the image A from the address B. The image saving service may obtain each editing operation of the editing operation stack from the address A. For example, an operation in the editing operation stack may include the graffiti track along the track 306 as shown in FIG. 8C.

A storage address configured in the memory for the image saving service may be the address D.

In this case, the image saving service may create a map D1 in the address D. The image saving service may draw the SDR image of the image A on the newly created map D1 of the address D. The image saving service may further draw the graffiti operation that includes the track 306 and that is from the address A on the SDR image of the image A of the newly created map D1 of the address D. In this way, on the newly created map D1 of the address D, the SDR image of the edited image may be obtained.

It may be understood that, after the SDR image of the image A is drawn on the newly created map D1, pixels of the map D1 may be set to corresponding color values. In this case, after the graffiti track is continued to be drawn on the map D1 and is correspondingly colored, on a pixel corresponding to the graffiti track, the image saving service may use color information corresponding to the graffiti track to overwrite a color that is of the pixel and that is indicated by the SDR image of the image A. In this way, after drawing of the graffiti operation is completed, effect of overwriting the SDR image of the image A through graffiti may be obtained on the map D1.

It should be noted that in a process of drawing the SDR image of the edited image, if the graffiti operation includes color information, the image saving service may perform a corresponding coloring operation on the graffiti track based on the color information of the graffiti operation. In this way, a colored SDR image of the edited image is obtained on the newly created map D1 of the address D.

In some other embodiments, the image saving service may obtain, from the storage address of the original image, the luminance graph of the original image obtained before editing. The image saving service may further obtain the editing operation of the user from the editing operation stack. Based on this, the image saving service may draw the luminance graph of the edited image in an address pre-configured in the memory.

For example, that the original image obtained before editing is the image A and the editing operation stack is transmitted by using the storage address of the editing operation stack is used as an example.

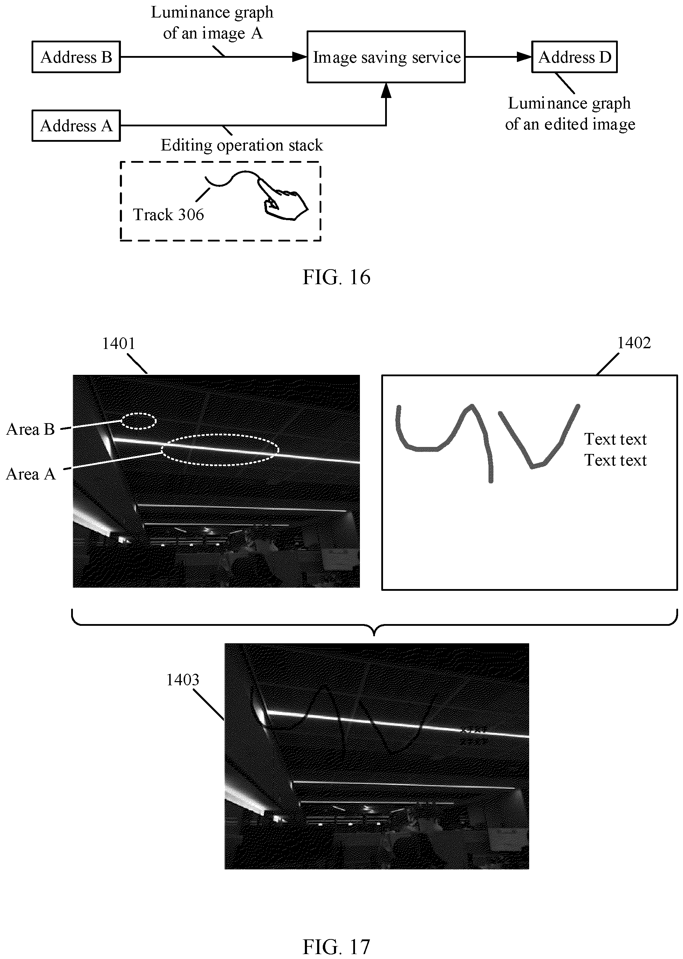

With reference to FIG. 16, the image saving service may obtain the luminance graph of the image A from the address B. The image saving service may obtain each editing operation of the editing operation stack from the address A. For example, an operation in the editing operation stack may include the graffiti track along the track 306 as shown in FIG. 8C.

The storage address configured in the memory for the image saving service may be the address D.

In this case, the image saving service may create a map D2 in the address D. The image saving service may draw the luminance graph of the image A on the newly created map D2 of the address D. The image saving service may further draw the graffiti operation that includes the track 306 and that is from the address A on the luminance graph of the image A of the newly created map D2 of the address D. In this way, on the newly created map D2 of the address D, the luminance graph of the edited image may be obtained.

It may be understood that, different from drawing of the SDR image, in a process of fusion drawing of the luminance graph, because each pixel has no fixed color value, a simple overwriting operation cannot be performed.

That the luminance graph is identified by using a transparency value is used as an example. In the image A, each pixel may correspond to a corresponding transparency value. The transparency value may be included in the SDR image information of the image A stored in the address B. Similarly, each pixel involved in the graffiti operation may correspond to a corresponding transparency value. The transparency value of each pixel involved in the graffiti operation may be stored in the editing operation stack. For example, the transparency value of each pixel may be stored in the color information in the editing operation stack.

In an implementation, the image saving service may perform, on the map D2 based on the luminance graph of the image A, grayscale coloring to obtain a grayscale image corresponding to transparency. For a grayscale coloring process, refer to the foregoing Table 1 and related descriptions. For example, a pixel with a transparency value of 0 is filled in black. A point with a transparency value of 255 is filled in white. Another transparency value may be filled based on a corresponding grayscale value.

The image saving service may further create a map D3. The map D3 may be stored in the address D, or may be stored in another position. The map D3 may be configured to draw a mask layer. The mask layer may correspond to transparency coloring drawing of the editing operation.

For example, that the editing operation includes a graffiti operation is used as an example. The image saving service can perform grayscale filling based on a transparency value in the editing operation stack on a pixel covered by the graffiti track.

Then, the image saving service may draw a mask layer image on the map D3 on the map D2. This process may be referred to as transparency fusion.

When transparency of any pixel is fused, the image saving service may determine, according to Formula (1), transparency of the pixel obtained after fusion.

Formula (1): Transparency obtained after fusion=(transparency in an original picture*(1-transparency of the mask layer/maximum transparency)).

The maximum transparency is 255.

In this way, for a pixel that is not covered by the graffiti track, because the mask layer does not include a transparency value of the pixel, it may be considered that mask layer transparency of the pixel is 0, that is, the pixel is completely transparent. In this case, the transparency of the pixel obtained after fusion is equal to the transparency in the original picture. For a pixel that is covered by the graffiti track, transparency obtained after transparency fusion is performed on the pixel may be obtained through calculation according to Formula (1).

In this way, through one-by-one transparency fusion of pixels on the map D2, the luminance graph corresponding to the edited image may be obtained on the map D2. The luminance graph includes a transparency value of the edited image in each pixel.

As a specific example, FIG. 17 is a schematic diagram of comparison between luminance graphs obtained before and after fusion in an actual scenario.

That the original image is an image B and the editing operation includes a graffiti operation and a text editing is used as an example.

In a scenario example of the image B in FIG. 17, objects such as a lamp band with relatively high luminance and a ceiling with relatively low luminance may be included.

Correspondingly, in a luminance graph of the image B, a pixel near the lamp band has a relatively large transparency value. A pixel near the ceiling has a relatively small transparency value.

In this way, after grayscale coloring is performed on the luminance graph of the image B based on the transparency value, effect shown in 1401 in FIG. 17 may be obtained. It can be seen that, at a position near the lamp band (for example, in an area A), a transparency value is relatively large, and a color of a luminance graph obtained after grayscale coloring is closer to white. At a position near the ceiling (for example, in an area B), a transparency value is relatively small, and a color of a luminance graph obtained after grayscale coloring is closer to black.

In the example of FIG. 17, a mask layer drawn based on each editing operation in an editing operation stack is shown in FIG. 1402.

The mask layer image shows a drawing result corresponding to the graffiti operation and the text editing. In this example, the graffiti operation may include two tracks, and a right track is lighter than a left track. In addition, the mask layer may further include two lines of text corresponding to the text editing, for example, "Text text" and "Text text".

After the foregoing transparency fusion based on Formula (1) is performed, a luminance graph of an edited image corresponding to the image B shown in FIG. 17 may be obtained, as shown in 1403 in FIG. 17. It should be noted that, in the luminance graph shown in FIG. 17, for ease of description, image effect obtained after grayscale coloring is performed based on a transparency value is used as an example for description.

As shown in FIG. 17, in the luminance graph of the edited image corresponding to the image B, there are interspersed graffiti tracks correspondingly drawn on the bright lamp band in the luminance graph of the image B. In addition, the luminance graph of the edited image corresponding to the image B may further include content of the text editing in the editing operation.

Therefore, by using the example shown in FIG. 17, it can be seen that, by using the solution provided in Formula (1), the luminance graph of the editing operation can be effectively fused into the luminance graph of the original image.

In this way, the image saving service may obtain the SDR image of the edited image on the map D1 of the address D by using the solution shown in FIG. 15. The image saving service may obtain the luminance graph of the edited image on the map D2 of the address D by using the solution shown in FIG. 16.

In this case, the image saving service may store two maps in the address D, to store the SDR image and the luminance graph of the edited image. In this way, when the user needs to view the edited image, that HDR display is enabled is used as an example, the electronic device may perform luminance adjustment processing on the display unit on the display based on the luminance graph of the edited image, to obtain E-HDR display effect of brighter highlights.

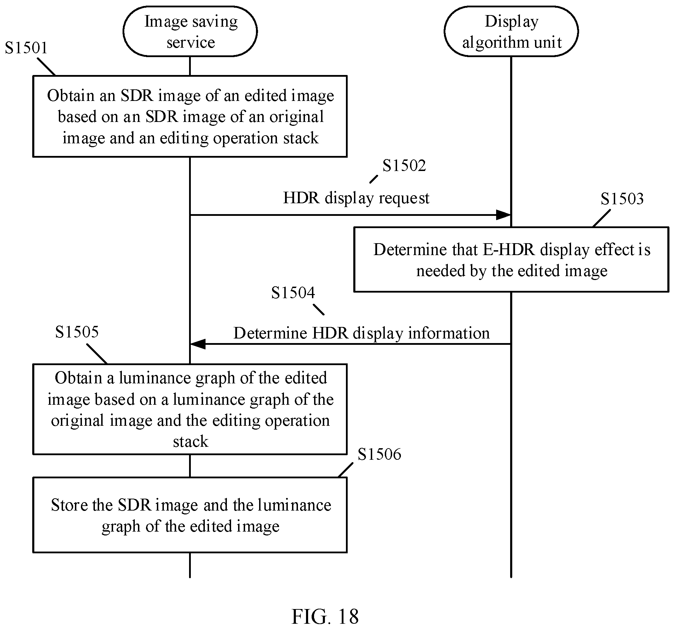

As an example, FIG. 18 is a schematic diagram of interaction between modules for obtaining an SDR image and a luminance graph of an edited image by an image saving service.

As shown in FIG. 18, the solution may include the following steps.

S1501: The image saving service obtains the SDR image of the edited image based on an SDR image of an original image and an editing operation stack.

For example, the image saving service may execute S1501 after receiving an image saving task from a task processing center.

With reference to the foregoing description, the image saving task may include image information that is of the edited image and that is obtained by the task processing center through parsing.

The image information may include a storage address of the original image, the editing operation stack, an HDR identifier, and the like.

That the original image is an image A is used as an example. The storage address of the original image may store an SDR image and a luminance graph of the image A. For example, the storage address may be the address B shown in FIG. 12.

The editing operation stack may include content of each editing operation input by a user in the image A. For example, that the user inputs an editing operation of graffiti is used as an example. The editing operation stack may include track information, color information, and the like that correspond to the graffiti operation. For another example, that the user further inputs an editing operation of text editing is used as an example. The editing operation stack may further include position information, text information, color information, and the like that correspond to the text editing.

The image saving quality may be used to perform corresponding data compression after the SDR image and/or the luminance graph of the edited image are obtained.

The HDR identifier is used to indicate whether the original image is an HDR image. In this example, that the original image (namely, the image A) is the HDR image is used as an example. A corresponding HDR identifier may be a first value.

In this example, the image saving service may obtain the SDR image of the edited image on a map D1 of an address D based on the solution shown in FIG. 15.

S1502: The image saving service sends an HDR display request to the display algorithm unit. The HDR display request may include the editing operation stack in the image saving task.

S1503: The display algorithm unit determines that E-HDR display effect is required by the edited image.

With reference to the foregoing description of the display algorithm unit in FIG. 11, in this example, one or more display-related policies may be preset in the display algorithm unit.

In some embodiments, the display algorithm unit may include an HDR effect determining policy. The HDR effect determining policy may be used by the display algorithm unit to determine, based on a current editing operation, whether luminance adjustment processing needs to be performed on the edited image obtained after editing.

As an example, when the current editing operation includes a luminance-related editing operation, the display algorithm unit may determine, according to the HDR effect determining policy, that luminance adjustment processing does not need to be performed on a display unit when the edited image is displayed.

The luminance-related editing operation may include beauty editing and/or filter editing.

In some implementations, if the display algorithm unit determines that luminance adjustment processing does not need to be performed, a determining result may be sent to the image saving service. The image saving service may no longer store luminance graph data of the edited image, and only store the SDR image of the edited image. The SDR image of the edited image may be obtained by using the solution shown in FIG. 15.

Correspondingly, when the current editing operation does not include a luminance-related editing operation, the display algorithm unit may determine, according to the HDR effect determining policy, that luminance adjustment processing needs to be performed on a display unit when the edited image is displayed.

For example, when the current editing operation includes at least one of the following: a graffiti operation, text editing, a trimming operation, and a rotation operation, the display algorithm unit may determine that luminance adjustment processing needs to be performed on the display unit when the edited image is displayed.

That the current editing operation includes the graffiti operation is used as an example. The display algorithm unit may determine, according to the HDR effect determining policy, that luminance adjustment processing needs to be performed on the display unit when the edited image is displayed, to obtain corresponding E-HDR display effect.

It should be noted that, in the foregoing example, that the HDR display request includes the editing operation stack is used as an example. In some other embodiments of this application, the HDR display request may further include the HDR identifier of the original image.

Correspondingly, before the display algorithm unit determines, based on the current editing operation, that luminance adjustment processing needs to be performed on a display unit when the edited image is displayed, the display algorithm unit may further trigger, based on the HDR identifier of the original image and when determining that the HDR identifier is a first value, that is, indicating that the original image is an HDR image (a corresponding luminance graph is stored), determining whether to perform luminance adjustment processing based on the editing operation.

It may be understood that, with reference to examples in FIG. 15 and FIG. 16, in this application, the luminance graph of the edited image needs to be used for luminance adjustment processing of the display unit. However, the luminance graph of the original image needs to be used for obtaining the luminance graph of the edited image. In other words, only when the original image is the HDR image and the corresponding luminance graph is stored, the image saving service can successfully obtain the luminance graph of the edited image.

S1504: The display algorithm unit feeds back determining HDR display information to the image saving service.

For example, the determining HDR display information may be used to indicate that the image saving service needs to perform luminance adjustment processing on the display unit when the edited image is displayed. Correspondingly, when receiving the determining HDR display information, the image saving service may trigger execution of S1505, to obtain the luminance graph of the edited image.

S1505: The image saving service obtains the luminance graph of the edited image based on the luminance graph of the original image and the editing operation stack.

For example, the image saving service may obtain the luminance graph of the original image from the storage address of the original image based on the solution shown in FIG. 16 or FIG. 17, and obtain the luminance graph of the edited image based on the editing operation stack. For a specific implementation of this step, refer to descriptions in FIG. 16 and FIG. 17. Details are not described again.

S1506: The image saving service stores the SDR image and the luminance graph of the edited image.

The SDR image of the edited image may be obtained in S1501, and the luminance graph of the edited image may be obtained in S1505. In some embodiments, the SDR image and the luminance graph of the edited image may be stored in different maps at a same physical position. For example, with reference to FIG. 15 and FIG. 16, the SDR image of the edited image corresponding to FIG. A may be stored in the map D1 of the address D, and the luminance graph of the edited image corresponding to FIG. A may be stored in the map D2 of the address D.

It should be noted that FIG. 18 is only an example of obtaining the SDR image and the luminance graph of the edited image. In some other implementations, a specific implementation may also be different from a procedure shown in FIG. 18.

For example, in some embodiments, in a case that the image information of the edited image carries the image saving quality, after S1505 and before S1506, the image saving service may further perform a compression operation on the obtained SDR image and/or the obtained luminance graph of the edited image based on a compression rate indicated by the image saving quality, to obtain image data of a size corresponding to the image saving quality for storage.

In some other embodiments, after execution of S1501 is completed, the image saving service may further determine a current quantity of image editing times, to update the editing operation. For example, in a case that the current quantity of image editing times is 0, the SDR image that is of the edited image and that is obtained in S1501 is updated. In this way, the obtained SDR image of the edited image may include content corresponding to all editing operations input by the user.

In some other embodiments, in a process of executing S1506, the image saving service may further perform other processing for the editing operation. For example, header (header) information of the current edited image is updated, a file of the edited image is saved in data, an HDR identifier of the edited image is set to the first value, and a file descriptor (such as a Special_file_expand field) of the edited image is updated, and the like.

Setting the HDR identifier of the edited image to the first value may be implemented in the following manner: writing ehdar information into a file tail of the edited image for identification.

In this way, by using the solutions provided in FIG. 12 to FIG. 18, an electronic device may automatically store, when the user determines to save the current editing operation, the SDR image and the luminance graph that include editing content and the original image. Further, when E-HDR display needs to be performed on the edited image subsequently, the electronic device may adjust luminance of a display unit at a corresponding position on the display based on the stored luminance graph of the edited image, to obtain the E-HDR display effect of the edited image.

It should be noted that, in the foregoing descriptions of FIG. 16, FIG. 17, and FIG. 18, in a process of obtaining the luminance graph of the edited image, the image saving service actually performs an operation such as coloring of the luminance graph of the original image and drawing of a mask layer.

In some other embodiments of this application, the image saving service may alternatively not perform coloring of the luminance graph of the original image and/or drawing of a mask layer.

In this case, in this example, when the image saving service needs to determine a transparency value of a pixel in the edited image, the image saving service may directly determine the transparency value of the pixel in the edited image through calculation based on a transparency value of a corresponding position in the original image and a transparency value of the editing content in the position with reference to Formula (1). The image saving service may repeatedly perform the foregoing operation on each pixel of the edited image, to obtain a transparency value of each pixel and save the transparency value. In this way, in a case that a grayscale colored image corresponding to the luminance graph of the original image is not actually drawn, and/or a mask layer image corresponding to the editing content is not actually drawn, the transparency value corresponding to each pixel included in the luminance graph of the edited image may be obtained.

In this way, by using the solution provided in FIG. 18, when displaying a full-size image of the edited image, the electronic device may provide more accurate E-HDR display effect.

To enable a person skilled in the art to understand the solutions provided in embodiments of this application more clearly and accurately, the following uses a specific implementation of obtaining and storing SDR image data and luminance graph data of an edited image in this application as an example, starting from a case that a user indicates to trigger entry of a graffiti function and with reference to a schematic diagram of interaction in each scenario in FIG. 11 to FIG. 18.

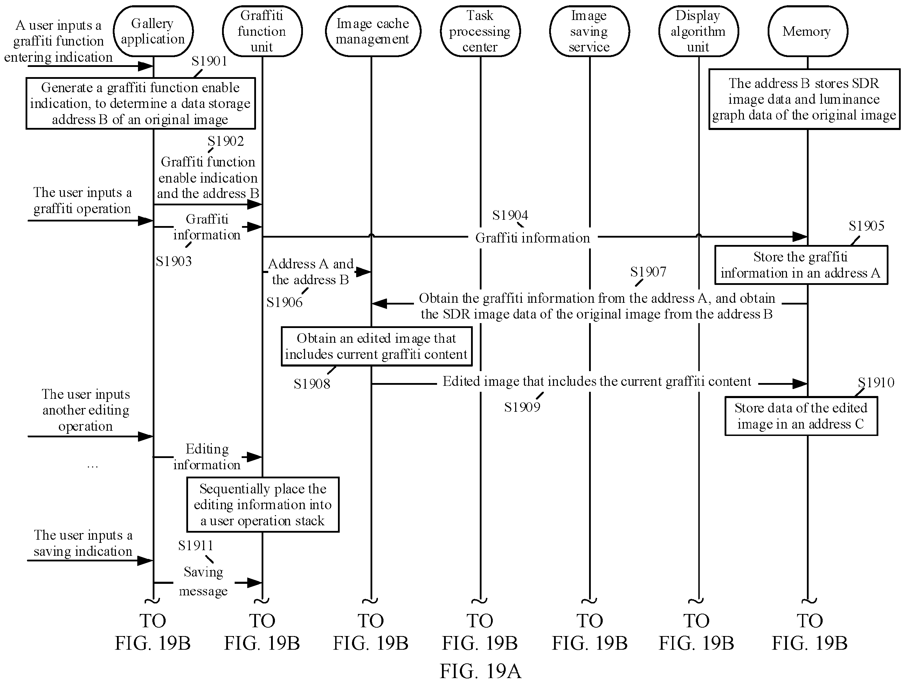

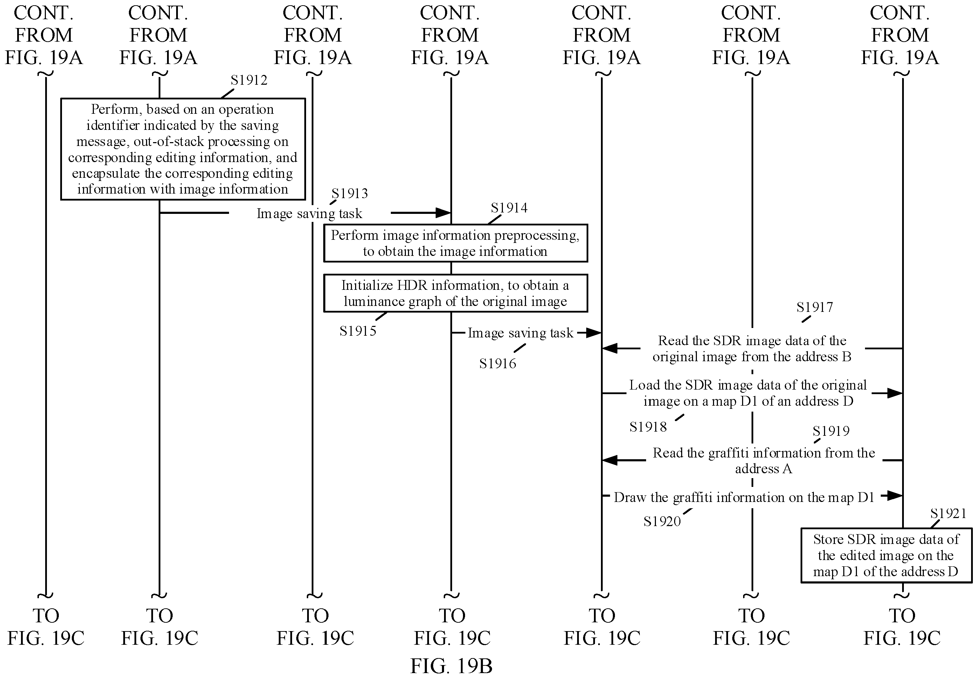

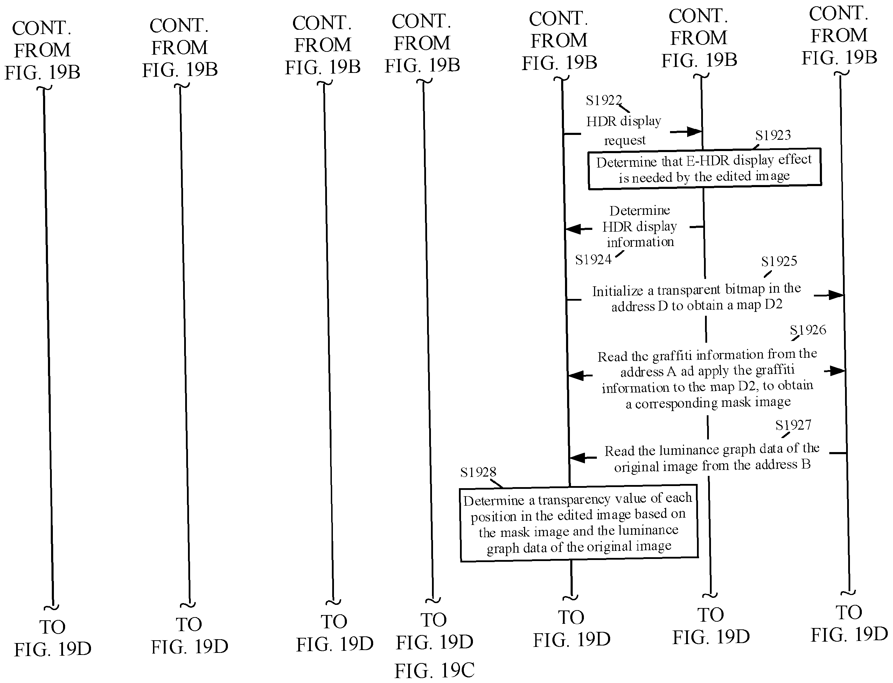

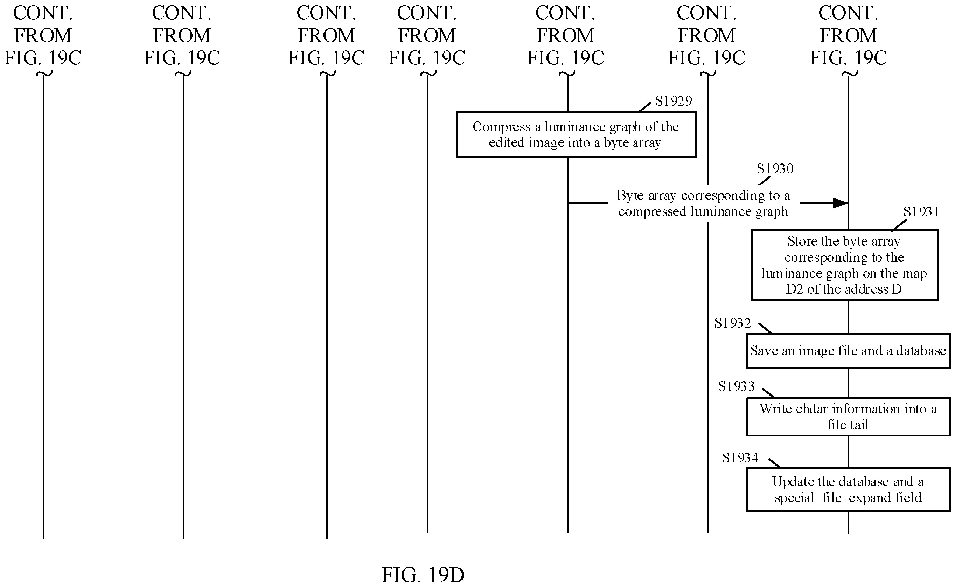

For example, as shown in FIG. 19A to FIG. 19D, the solution may include the following steps.

S1901: A Gallery application generates a graffiti function enable indication, to determine a data storage address B of an original image.

For example, the Gallery application may generate the graffiti function enable indication under an indication of a user. For example, the indication of the user may include the operation 320 shown in FIG. 8B.

In this example, the Gallery application may enter a graffiti mode for an image A under an indication of the operation 320. To implement preview update of subsequent graffiti content and storage of an edited image, the Gallery application may further determine a data storage address B of an image (namely, the image A) that is currently being edited. The data storage address B may store SDR image data and luminance graph data of the image A.

S1902: The Gallery application sends the graffiti function enable indication and the address B to a graffiti function unit.

In this way, the graffiti function unit may determine to trigger a graffiti mode for a current image (namely, the image A).

S1903: The Gallery application sends graffiti information to the graffiti function unit.

It may be understood that, after the user inputs the operation 320, graffiti content may be input on a current interface, for example, a graffiti path, setting a graffiti color, and the like. Correspondingly, the Gallery application may send the graffiti information including the graffiti path, the graffiti color, and other information to the graffiti function unit.

S1904: The graffiti function unit sends the graffiti information to a memory for storage.

S1905: The memory stores the graffiti information in an address A.

For example, the memory may store, in the address A, the graffiti information such as the graffiti path and the graffiti color that are input by the user.

S1906: The graffiti function unit sends the address A and the address B to image cache management.

The address A stores the graffiti information, and the address B stores the SDR image data and the luminance graph data of the original image.

S1907: The image cache management obtains the graffiti information from the address A of the memory, and obtains the SDR image data of the original image from the address B.

S1908: The image cache management obtains the edited image that includes the current graffiti content.

For example, the image cache management may draw the graffiti content corresponding to the graffiti information in an SDR image, to obtain the edited image that includes the graffiti content.

S1909: The image cache management sends, to the memory, the edited image that includes the current graffiti content.

S1910: The memory stores data of the edited image in an address C.

In this way, image data including the current graffiti content may be obtained in the address C. It may be understood that, as the user input more graffiti operations or other editing operations, content of the image data stored in the address C may also be correspondingly updated. Updated image data may include content of all editing operations input by the user.

In some implementations, an electronic device may perform display sending based on the image data in the address C at a specific frequency (such as a screen refresh rate). In this way, the user updates a preview image in an original image editing process.

For a specific implementation of S1901 to S1910, reference may also be made to steps in FIG. 12. For a specific implementation, reference may be made to each other.

It may be understood that an editing operation performed by the user on an image may be step-by-step input. In this case, the Gallery application also receives a plurality of other editing operations input by the user, for example, more graffiti operations, text editing, and the like. That the operation input by the user is a graffiti operation is used as an example.

In this example, the Gallery application may separately send editing information corresponding to a received editing operation to the graffiti function unit, so that the graffiti function unit sequentially places the editing information into a user operation stack.

After the graffiti operation and another editing operation are completed, the user may input a saving indication to the electronic device. For example, the saving indication may correspond to the operation 350 shown in FIG. 8D. In response to this operation 350, the electronic device may perform the following steps to save the edited image.

S1911: The Gallery application sends a saving message to the graffiti function unit.

S1912: The graffiti function unit performs, based on an operation identifier indicated by the saving message, out-of-stack processing on corresponding editing information, and encapsulates the corresponding editing information with image information.

It may be understood that the user operation stack may include a plurality of pieces of operation information. In this case, to accurately extract content of the editing operation performed by the user on the current image, the graffiti function unit may perform, based on an identifier that is of the original image and that is indicated by the saving message, out-of-stack processing on editing information of the original image from the user operation stack.

In addition, to support subsequent accurate storage of the image, the graffiti function unit may further obtain image information of the current original image. For example, the image information may include the user operation stack formed by the foregoing user operations, the storage address of the original image, image saving quality, an HDR identifier, and other information.

The graffiti function unit may perform encapsulation processing on the foregoing image information, to facilitate subsequent module invoking.

S1913: The graffiti function unit initiates an image saving task to a task processing center. The image saving task may carry a data packet obtained after the image information is encapsulated.

S1914: The task processing center performs image information preprocessing, to obtain the image information. For example, the task processing center may receive the image saving task, parse the data packet carried in the task processing center, and obtain the image information.

S1915: The task processing center initializes HDR information, to obtain a luminance graph of the original image.

It may be understood that, in this solution, a luminance graph of the stored edited image is also updated based on the luminance graph of the original image. In this way, before delivering the image saving task, the task processing center may obtain the luminance graph data of the original image through parsing in advance, or obtain a storage address of the luminance graph data of the original image, to facilitate subsequent quick invoking.

S1916: The task processing center sends the image saving task to an image saving service. The image saving task may include the luminance graph data or the data storage address that is of the original image and that is obtained through initialization by the task processing center. The image saving task may further include the image information.

For execution of the foregoing S1910 to S1916, refer to the solution description in FIG. 14. For a specific implementation, reference may be made to each other.

S1917: The image saving service reads the SDR image data of the original image from the address B.

S1918: The image saving service loads the SDR image data of the original image on a map D1 of an address D.

S1919: The image saving service reads the graffiti information from the address A.

S1920: The image saving service draws the graffiti information on the map D1.

S1921: The memory stores SDR image data of the edited image on the map D1 of the address D.

S1922: The image saving service sends an HDR display request to a display algorithm unit. The HDR display request may include a type identifier of the current editing operation. For example, the type identifier may indicate that a type of the current editing operation is a graffiti operation. For another example, the type identifier may indicate that a type of the current editing operation includes a graffiti operation, text editing, and the like. In some other examples, if the user inputs a beauty operation, the type identifier may indicate that a type of the current editing operation is the beauty operation.

S1923: The display algorithm unit determines that E-HDR display effect is required by the edited image.

For example, the display algorithm unit may determine, based on that the type identifier of the current editing operation includes a graffiti operation, text editing, and the like, that the E-HDR display effect is required by the edited image.

For another example, in some other embodiments, in a case that the type identifier indicates that the type of the current editing operation is luminance-related editing such as a beauty operation, the display algorithm unit may determine that the edited image does not need E-HDR display effect.

S1924: The display algorithm unit sends determining HDR display information to the image saving service.

In response to the determining HDR display information, the image saving service may perform the following fusion operation on the luminance graph of the original image and the editing content.

S1925: The image saving service initializes a transparent bitmap (bitmap) in the address D to obtain a map D2.

S1926: The image saving service reads the graffiti information from the address A ad applies the graffiti information to the map D2, to obtain a corresponding mask image.

S1927: The image saving service reads the luminance graph data of the original image from the address B.

S1928: The image saving service determines a transparency value of each position in the edited image based on the mask image and the luminance graph data of the original image.

In this example, that an image of a mask layer is drawn on the map D2 is used as an example. With reference to the foregoing description, in some other embodiments, the mask image may alternatively not need to be drawn. The image saving service may directly determine, based on the transparency value of each position and a transparency value that is of the position and that is indicated by the editing content and through calculation by using Formula (1), a transparency value of the position in the luminance graph of the edited image.

In this way, SDR image data and luminance graph data that are fused with the editing content may be obtained.

In some cases, the image saving service may further perform one or more of the following operations based on the image information, to implement writing-to-disk storage of the SDR image data and the luminance graph data of the edited image.

S1929: The image saving service compresses the luminance graph of the edited image into a byte (byte) array.

For example, a specific parameter (such as a compression rate) of the compression process may be determined based on the image saving quality in the image information.

S1930: The image saving service sends, to the memory, the byte array corresponding to a compressed luminance graph.

S1931: The memory stores the byte array corresponding to the luminance graph on the map D2 of the address D.

S1932: The memory saves an image file and a database.

S1933: The memory writes ehdar information into a file tail. The ehdar information may be used to indicate image data stored at a current position, and may be used to support E-HDR display.

S1934: The memory updates the database and a special_file_expand field, to accurately invoke the image data in a display process.

It should be noted that, in some implementations, a storage address of the edited image and the storage address of the original image may be different. For example, image data of the edited image is stored in the address D, and image data of the original image is stored in the address B. In this case, after the image data of the edited image is written to a disk, the image data of the edited image and the image data of the original image may be separately stored in the memory.

In some other embodiments, a storage address of the edited image may alternatively be the same as the storage address of the original image. After obtaining the edited image, the electronic device may store the image data of the edited image over the image data of the original image. In this way, after writing-to-disk of the image data of the edited image is completed, only one piece of image data, namely, the image data that is of the edited image and that includes the editing content, related to the image A is stored in the memory.

In some other embodiments, the storage address of the edited image may alternatively be different from the storage address of the original image. However, based on an indication that only the edited image is stored and that is input by the user, the image saving service may delete the image data of the original image after writing-to-disk of the image data of the edited image is completed. In this way, after the writing-to-disk of the image data of the edited image is completed, only one piece of image data, namely, the image data that is of the edited image and that includes the editing content related to the image A is stored in the memory.

In this way, by using the foregoing solution description, the editing content may be fused into the luminance graph of the edited image. Therefore, it is convenient for subsequent luminance adjustment processing performed by the electronic device on the edited image.

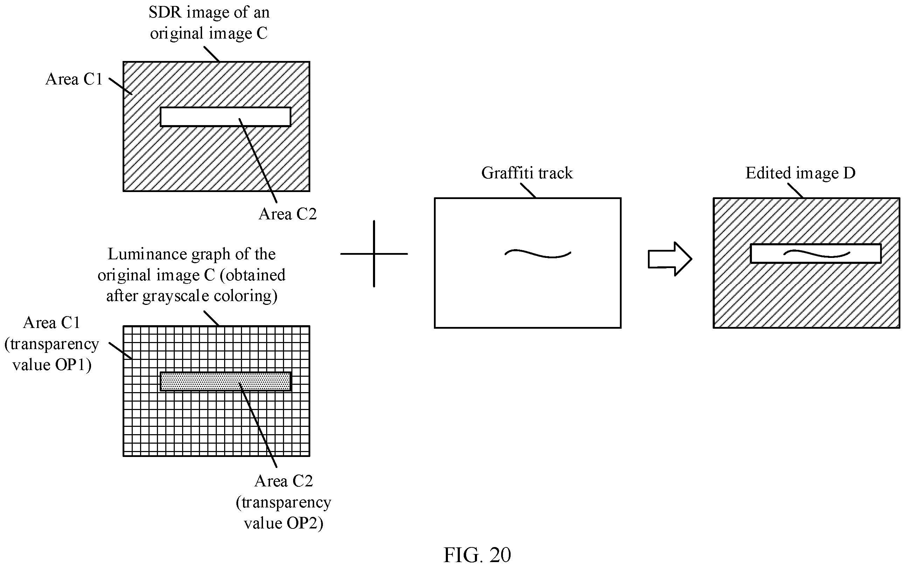

For example, FIG. 20 is an example of an image editing scenario.

In this example, an image obtained before editing may be an original image C. The original image C may include an area C1 and an area C2. Transparency values of the area C1 and the area C2 are different.

For example, as shown in FIG. 20, in the original image C, the transparency value of the area C1 is OP1. In the original image C, the transparency value of the area C2 is OP2.

In the area C2 of the original image C, a graffiti operation may be performed. In this way, an obtained SDR image of an edited image may be an edited image D. For example, a transparency value on a graffiti track may be a transparency value OP3. In some implementations, the area C2 may also be referred to as a first area.

OP1, OP2 and OP3 are different.

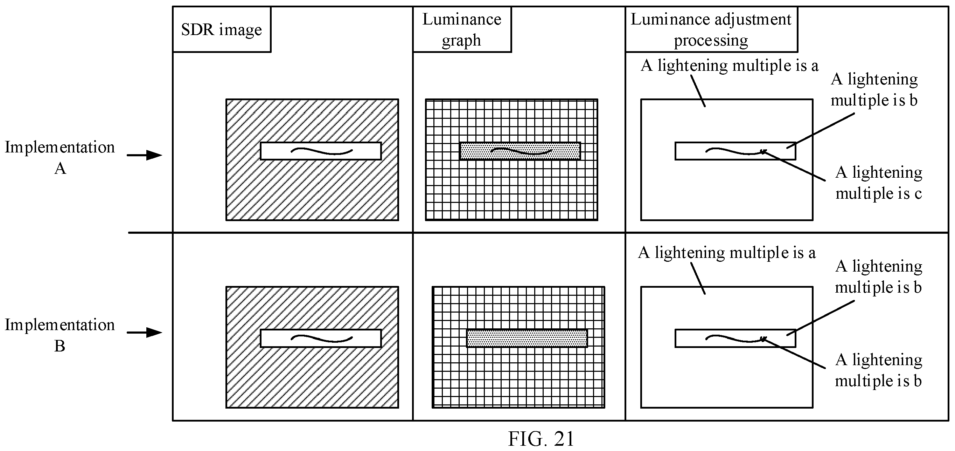

In this way, FIG. 21 shows comparison between luminance adjustment processing obtained when a transparency fusion solution provided in this application is used (the solution shown in FIG. 19A to FIG. 19D) and when the solution shown in FIG. 19A to FIG. 19D is not used. Using the solution shown in FIG. 19A to FIG. 19D may be referred to as an implementation A. Correspondingly, not using the solution shown in FIG. 19A to FIG. 19D may be referred to as an implementation B.

As shown in FIG. 21, in the implementation B, a luminance graph of the edited image D is a luminance graph of the original image shown in FIG. 20. When luminance adjustment processing is performed based on this, a lightening multiple of a display unit that is on a display and that corresponds to the area C1 may be a. A lightening multiple of a display unit that is on the display and that corresponds to the area C2 may be b. A lightening multiple of a graffiti path included in the area C2 may also be b.

Correspondingly, in the implementation A, a luminance graph of the edited image D may update, in the area C2, a luminance area in which a fusion graffiti operation is performed. When luminance adjustment processing is performed based on this, a lightening multiple of a display unit that is on a display and that corresponds to the area C1 may be a. On the display and in the area C2, lightening multiples of display units outside a graffiti path may be b. A lightening multiple of the graffiti path in the area C2 may be adjusted to c based on an updated luminance graph.

It should be noted that, in the solution implementation provided in FIG. 21, luminance adjustment processing is described by using a configuration of a lightening multiple. It may be understood that, based on a same or similar luminance value, when a lightening multiple is higher, a luminance value obtained after lighting is also higher.

From another perspective, that the two implementations shown in FIG. 21 are described by using a luminance value may also be the following.

That when the original image C is displayed, a luminance value of the display unit at a position corresponding to the area C1 is d1 (or a first luminance value), and a luminance value of the display unit at a position corresponding to the area C2 is d2 (or a second luminance value) is used as an example.

Based on the implementation B, the luminance graph of the edited image D is consistent with the luminance graph of the original image C. After luminance adjustment processing is performed, when the edited image D is displayed, the luminance value of the display unit at the position corresponding to the area C1 is adjusted to d1'. The luminance value of the display unit at the position corresponding to the area C2 is adjusted to d2'. In some implementations, d1' may be the same as d1. In some other implementations, d1' may be different from d1. Similarly, in some implementations, d2' may be the same as d2. In some other implementations, d2' may be different from d2. In the following example, that d1' and d1 are the same as the first luminance value and d2' and d2 are the same as the second luminance value is used as an example.

In this example, the area C2 may further include graffiti content. In this implementation B, a luminance value of a display unit at a position corresponding to the graffiti content may be the same as a luminance value corresponding to another position in the area C2, and both of which are d2'.

In comparison, based on the implementation A, the luminance graph of the edited image D fuses graffiti content. The graffiti content is located in the area C2.

After luminance adjustment processing is performed, when the edited image D is displayed, the luminance value of the display unit at the position corresponding to the area C1 is adjusted to d1'. The luminance value of the display unit at the position corresponding to the area C2 is adjusted to d2'.

Different from the implementation B, in this implementation A, a luminance value of a display unit at a position corresponding to the graffiti content may be different from a luminance value corresponding to another position in the area C2. For example, the luminance value of the display unit at the position corresponding to the graffiti content may be adjusted to d3. In the area C2, the luminance value of a display unit at another position different from the graffiti content may be adjusted to d2'.

For example, in the implementation A, the luminance value of the display unit at the position corresponding to the graffiti content may be different from the second luminance value, for example, d3 corresponds to a third luminance value.

For ease of description, in this application, the original image may also be referred to as a first image, and the edited image may also be referred to as a second image. An SDR image of the original image is a first SDR image, and the luminance graph of the original image is a first luminance graph. Correspondingly, the SDR image of the edited image is the second SDR image, and the luminance graph of the edited image is a second luminance graph.

The first image may include a first position and a second position. Correspondingly, the second image may also include a first position and a second position. It may be understood that the first position may be a position outside an editing path, and the second position may be any position on the editing path. For example, the first position may be any position outside the graffiti path shown in FIG. 21. For another example, the second position may be any position on the graffiti path shown in FIG. 21.

In this way, through luminance adjustment processing that is performed on image data of the edited image and that is obtained in the solution shown in FIG. 19A to FIG. 19D, impact of the graffiti content on an image display process can be effectively combined into final display control, thereby providing more accurate E-HDR display effect.

The foregoing mainly describes the solutions provided in embodiments of this application from a perspective of function modules. A person skilled in the art should be easily aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The integrated module may be implemented in a form of hardware, or may be implemented in a form of software functional module. It should be noted that module division in embodiments of this application is an example, and is merely logical function division. In actual implementation, there may be another division manner.

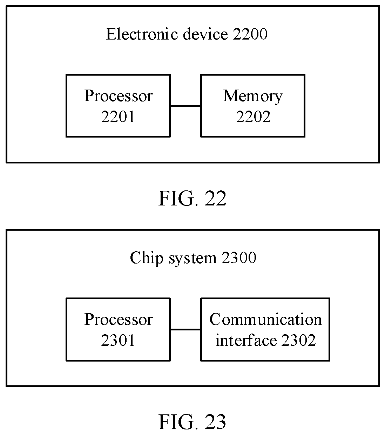

For example, FIG. 22 is a schematic diagram of composition of an electronic device 2200. As shown in FIG. 22, the electronic device 2200 may include a processor 2201 and a memory 2202. The memory 2202 is configured to store computer execution instructions. For example, in some embodiments, when the processor 2201 executes the instructions stored in the memory 2202, the electronic device 2200 may be enabled to perform the method shown in any one of the foregoing embodiments.

It should be noted that all related content of the steps in the foregoing method embodiments may be cited in function descriptions of corresponding function modules. Details are not described herein again.

FIG. 23 is a schematic diagram of composition of a chip system 2300. The chip system 2300 may include a processor 2301 and a communication interface 2302, and is configured to support a related device in implementing the functions in the foregoing embodiments. In a possible design, the chip system further includes a memory, configured to store program instructions and data that are necessary for an electronic device. The chip system may include a chip, or may include a chip and another discrete component. It should be noted that in some implementations of this application, the communication interface 2302 may also be referred to as an interface circuit.

It should be noted that all related content of the steps in the foregoing method embodiments may be cited in function descriptions of corresponding function modules. Details are not described herein again.

All or some of functions, actions, operations, steps, or the like in the foregoing embodiments may be implemented by software, hardware, firmware, or any combination thereof. When a software program is used to implement embodiments, embodiments may be implemented completely or partially in a form of computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clearly that a person skilled in the art can make various modifications and variations to this application without departing from the spirit and scope of this application. In this case, this application is intended to cover these modifications and variations of this application provided that they fall within the scope of protection defined by the claims of this application and their equivalent technologies.

## Claims

1. An image processing method, wherein the method is applied to an electronic device, a first application runs in the electronic device, the electronic device stores a first image and a second image, and the second image comprises the first image and editing content added to the first image through editing processing; and
the method comprises:
displaying, by the electronic device, the first image by using a display, wherein a luminance value of a first position on the display is a first luminance value, and a luminance value of a second position on the display is a second luminance value; and
displaying, by the electronic device, the second image by using the display, wherein the luminance value of the first position is the first luminance value, the luminance value of the second position is a third luminance value, and the second luminance value is different from the third luminance value; and
the second position on the display is located on a path of the editing content, and the first position on the display is not located on the path of the editing content.

2. The method according to claim 1, wherein
the first image comprises a first SDR image and a first luminance graph, and the second image comprises a second SDR image and a second luminance graph.

3. The method according to claim 2, wherein the first luminance graph is different from the second luminance graph.

4. The method according to claim 3, wherein the first luminance graph comprises first luminance graph data, and the second luminance graph comprises second luminance graph data; and
that the first luminance graph is different from the second luminance graph comprises:
that the first luminance graph data is different from the second luminance graph data.

5. The method according to claim 4, wherein the first luminance graph data comprises a transparency value of each position in the first image, and the second luminance graph data comprises a transparency value of each position in the second image; and
that the first luminance graph data is different from the second luminance graph data comprises:
that in the first luminance graph data, a transparency value of a position corresponding to the second position is a first transparency value;
that in the second luminance graph data, a transparency value of a position corresponding to the second position is a second transparency value; and
that the first transparency value is different from the second transparency value.

6. The method according to any one of claims 2 to 5, wherein the electronic device configures, based on a luminance graph of a target image, a luminance value that is of each display unit on the display and that is obtained when the target image is displayed.

7. The method according to claim 6, wherein the target image comprises the first image; and
the displaying, by the electronic device, the first image by using a display comprises:
configuring and displaying, by the electronic device, a luminance value of each display unit on the display based on the first luminance graph.

8. The method according to claim 6 or 7, wherein the target image comprises the second image; and
the displaying, by the electronic device, the second image by using the display comprises:
configuring and displaying, by the electronic device, a luminance value of each display unit on the display based on the second luminance graph.

9. The method according to any one of claims 6 to 8, wherein
when a transparency value indicated by the luminance graph of the target image is larger, a luminance value that is of a corresponding position on the display and that is configured by the electronic device is larger.

10. The method according to any one of claims 2 to 9, wherein
content corresponding to the second SDR image comprises content corresponding to the first SDR image, and the content corresponding to the second SDR image further comprises the editing content.

11. The method according to any one of claims 2 to 10, wherein
after grayscale coloring is performed on the first luminance graph and the second luminance graph, content corresponding to the second luminance graph comprises the editing content.

12. The method according to any one of claims 2 to 11, wherein before the displaying, by the electronic device, the second image by using the display, the method further comprises:
receiving, by the electronic device, an editing operation of a user, wherein the editing operation is used to perform image editing on the first image, and the image editing comprises at least one of the following: a graffiti operation, text editing, a trimming operation, and a rotation operation; and
in response to the editing operation, performing, by the electronic device, editing processing on the first image, to obtain the second image.

13. The method according to claim 12, wherein the performing, by the electronic device, editing processing on the first image, to obtain the second image comprises:
creating a first map, and drawing the first SDR image on the first map; and
drawing, on the first SDR image on the first map based on the editing operation, the editing content corresponding to the editing operation, to obtain the second SDR image of the second image on the first map.

14. The method according to claim 13, wherein the performing, by the electronic device, editing processing on the first image, to obtain the second image further comprises:
determining the second luminance graph of the second image based on the first luminance graph of the first image.

15. The method according to claim 14, wherein the determining the second luminance graph of the second image comprises: determining transparency values of the first position and the second position.

16. The method according to claim 15, wherein determining the transparency value of the second position comprises:
determining the first transparency value of the second position based on the first luminance graph of the first image;
obtaining a transparency value of the editing content at the second position based on the editing operation; and
determining the transparency value of the second position in the second image based on the first transparency value and the transparency value of the editing content at the second position.

17. The method according to claim 15 or 16, wherein determining the transparency value of the first position comprises:
determining a third transparency value of the first position based on the first luminance graph of the first image; and
determining the third transparency value as the transparency value of the first position in the second image.

18. The method according to claim 17, wherein before the determining the second luminance graph of the second image, the method further comprises:
determining that luminance adjustment processing needs to be performed when the second image is displayed, to obtain E-HDR display effect, wherein
the luminance adjustment processing comprises: adjusting luminance of each position display unit on the display based on the second luminance graph of the second image.

19. The method according to claim 18, wherein the determining that luminance adjustment processing needs to be performed when the second image is displayed comprises:
obtaining, by the electronic device, a type of the editing operation; and
in a case that the type of the editing operation is a first type, determining that luminance graph adjustment processing needs to be performed on the second image when the second image is displayed, wherein
the type of the editing operation comprises the first type and a second type, the first type indicates that a current editing operation is not related to luminance adjustment, and the second type indicates that a current editing operation is a luminance-related editing operation.

20. The method according to claim 19, wherein
an editing operation corresponding to the first type comprises at least one of the following: a graffiti operation, text editing, a trimming operation, and a rotation operation; and
an editing operation corresponding to the second type comprises at least one of the following: beauty editing and filter editing.

21. The method according to any one of claims 12 to 20, wherein before performing editing processing on the first image, to obtain the second image, the method further comprises:
placing, into a user operation stack, editing information of the editing operation input by the user, wherein
the editing information comprises at least one of the following: path information of the editing operation, color information of the editing operation, and text information of the editing operation.

22. The method according to claim 21, wherein the method further comprises:
receiving a saving indication of the user, wherein the saving indication is used to indicate the electronic device to store a current edited image; and
in response to the saving indication, obtaining, by the electronic device, the second image and saving the second image.

23. The method according to claim 22, wherein obtaining the second image comprises:
obtaining, from the user operation stack according to the saving indication, at least one piece of editing information corresponding to a current editing operation;
determining image information of the second image based on the at least one piece of editing information corresponding to the current editing operation, wherein
the image information of the second image comprises a first storage address of the first image, the at least one piece of editing information corresponding to the current editing operation, and image saving quality;
generating an image saving task, wherein the image saving task carries the image information of the second image; and
executing the image saving task, and determining the second image based on the image information of the second image.

24. An image processing method, wherein the method is applied to an electronic device; and the method comprises:
displaying, by the electronic device, a first image by using a display, wherein the first image comprises a first area, and luminance that is on the display and that corresponds to the first area is a first luminance value;
receiving an editing operation of a user on the first image, wherein the editing operation passes through the first area, and the editing operation corresponds to editing content;
saving, by the electronic device, a second image, wherein the second image comprises the editing content; and
displaying, by the electronic device, the second image by using the display, wherein the second image comprises the first area, luminance that is on the display and that corresponds to an area in the first area other than the editing content is the first luminance value, and luminance that is on the display and that corresponds to the editing content is a second luminance value; and
the first luminance value is different from the second luminance value.

25. The method according to claim 24, wherein before the displaying, by the electronic device, a first image by using a display, the method further comprises:
storing, by the electronic device, a first SDR image and a first luminance graph of the first image.

26. The method according to claim 24 or 25, wherein
before the saving, by the electronic device, a second image, the method further comprises:
receiving, by the electronic device, a saving indication of the user, and storing a second SDR image and a second luminance graph of the second image, wherein the first luminance graph is different from the second luminance graph.

27. The method according to claim 26, wherein the first luminance graph comprises first luminance graph data, and the second luminance graph comprises second luminance graph data; and
that the first luminance graph is different from the second luminance graph comprises:
that the first luminance graph data is different from the second luminance graph data.

28. The method according to claim 27, wherein the first luminance graph data comprises a transparency value of each position in the first image, and the second luminance graph data comprises a transparency value of each position in the second image; and
that the first luminance graph data is different from the second luminance graph data comprises:
that in the first luminance graph data, a transparency value of a position corresponding to the second position is a first transparency value;
that in the second luminance graph data, a transparency value of a position corresponding to the second position is a second transparency value; and
that the first transparency value is different from the second transparency value.

29. An electronic device, wherein the electronic device comprises a memory, a display, and one or more processors; and the memory and the display are coupled to the processor; and
the memory is configured to store computer program code, the computer program code comprises computer instructions, and when the processor executes the computer instructions, the electronic device is enabled to perform the method according to any one of claims 1 to 23 or 24 to 28.

30. A computer-readable storage medium, comprising computer instructions, wherein when the computer instructions are run on an electronic device, the electronic device is enabled to perform the method according to any one of claims 1 to 23 or 24 to 28.
